# EUROPEAN PATENT APPLICATION

(11) **EP 4 412 309 A1**
(43) Date of publication of application: **07.08.2024**
(21) Application number: 22876260.5
(22) Date of filing: 27.09.2022
(51) Int. Cl.: H04W 36/18, H04W 72/0457

(54) **COMMUNICATION SYSTEM**

(30) Priority: 28.09.2021 JP 2021158267
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2022/036016
(87) International publication number: WO 2023/054394

(57) **Abstract**

A communication system includes a plurality of base stations, and in a case where it is necessary to cause a communication terminal to perform handover to another base station, a first base station that is a base station to which the communication terminal is being connected among the plurality of base stations makes a handover configuration request to one or more second base stations that are base stations to be candidates for a handover destination among the plurality of base stations, while maintaining connection to the communication terminal, and, after acceptance of the handover configuration request by the second base stations, the first base station gives an instruction for handover to the communication terminal being connected.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

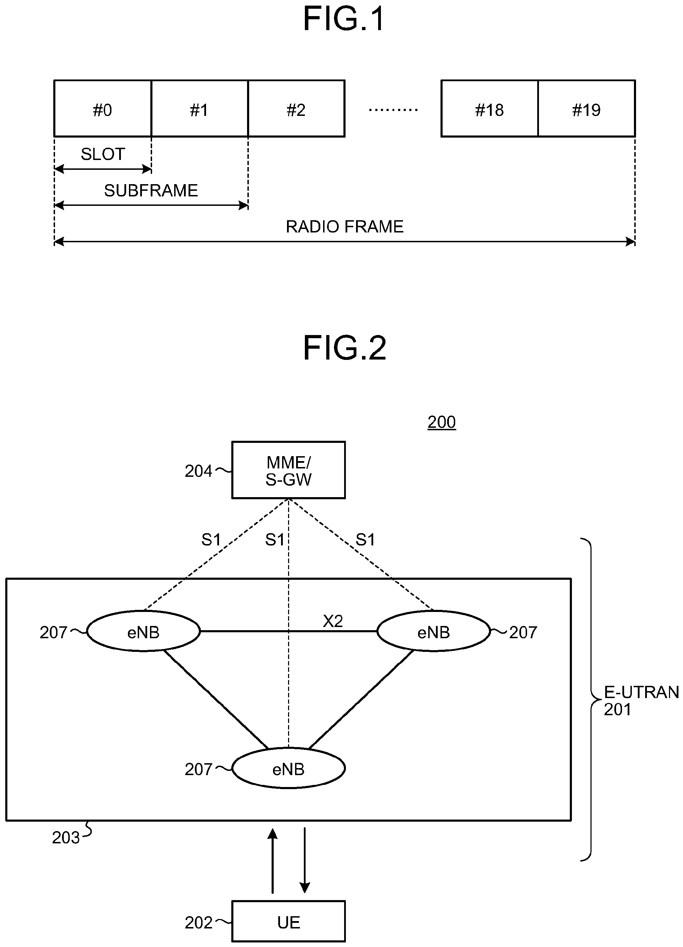

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport Channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical Channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic Channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)) .

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). In the SL communication, communication is performed between terminals. Examples of the service using the SL communication include a vehicle-to-everything (V2X) service and a proximity service. In the SL communication, not only direct communication between terminals but also communication between a UE and an NW via a relay has been proposed (see Non Patent Literatures 20, 23, 26, and 27).

In addition, several new technologies have been studied in 3GPP. For example, in NR, dual active protocol stack (DAPS) HO and conditional HO (CHO) have been studied in order to shorten communication interruption time upon mobility and to improve robustness (see Non Patent Literature 16 (3GPP TS 38.300)).

As another example, conditional PSCell change (CPC) has been studied to improve robustness in a dual connectivity (DC) configuration process (see Non Patent Literature 12 (3GPP TS 37.340)).

### Citation List

### Non Patent Literature

Non Patent Literature 1: 3GPP TS 36.300 V16.5.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.5.0
Non Patent Literature 13: 3GPP TS 38.211 V16.5.0
Non Patent Literature 14: 3GPP TS 38.213 V16.5.0
Non Patent Literature 15: 3GPP TS 38.214 V16.5.0
Non Patent Literature 16: 3GPP TS 38.300 V16.5.0
Non Patent Literature 17: 3GPP TS 38.321 V16.4.0
Non Patent Literature 18: 3GPP TS 38.212 V16.5.0
Non Patent Literature 19: 3GPP TS 38.331 V16.4.1
Non Patent Literature 20: 3GPP TR 23.703 V12.0.0
Non Patent Literature 21: 3GPP TS 23.501 V17.0.0
Non Patent Literature 22: 3GPP TS 23.287 V16.5.0
Non Patent Literature 23: 3GPP TS 23.303 V16.0.0
Non Patent Literature 24: 3GPP TS 38.305 V16.4.0
Non Patent Literature 25: 3GPP TS 23.273 V17.0.0
Non Patent Literature 26: 3GPP R2-2009145
Non Patent Literature 27: 3GPP TR 38.836 V17.0.0
Non Patent Literature 28: 3GPP RWS-210196
Non Patent Literature 29: 3GPP RWS-210078

### Summary of Invention

### Problem to be solved by the Invention

In 5G, a dense network is formed with increasing frequency, and therefore, it is assumed that change of a base station and HO frequently occur. In such a network, it is required to reduce communication interruption time and to improve the robustness and reliability of communication. Therefore, 3GPP has proposed studies of, for example, a combination of CHO and CPC, and a combination of DAPS HO and CHO, as a mobility enhancement technology and a DC enhancement technology (Non Patent Literature 28 (3GPP RWS-210196) and Non Patent Literature 29 (3GPP RWS-210078)). However, there is no disclosure of specific methods of these enhancement technologies. Accordingly, these enhancement technologies cannot be executed, which causes problems in that communication interruption time cannot be reduced and the robustness and reliability of communication cannot be improved.

In view of the above problems, an object of the present disclosure is to improve the reliability of communication in a communication system.

### Means to Solve the Problem

A communication system according to the present disclosure includes a plurality of base stations. In a case where it is necessary to cause a communication terminal to perform handover to another base station, a first base station that is a base station to which the communication terminal is being connected among the plurality of base stations makes a handover configuration request to one or more second base stations that are base stations to be candidates for a handover destination among the plurality of base stations while maintaining connection to the communication terminal, and, after acceptance of the handover configuration request by the second base stations, the first base station gives an instruction for handover to the communication terminal being connected.

### Effects of the Invention

The communication system according to the present disclosure achieves an effect that it is possible to improve reliability of communication.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a sequence diagram illustrating an example of a method for executing DAPS CHO in a first embodiment.
FIG. 15 is a diagram of a first half of a sequence illustrating an example of a method for executing DAPS SN change in a second embodiment.
FIG. 16 is a diagram of a second half of the sequence illustrating the example of the method for executing the DAPS SN change in the second embodiment.
FIG. 17 is a diagram of a first half of a sequence illustrating an example of a method for executing DAPS inter-SN CPC in a third embodiment.
FIG. 18 is a diagram of a second half of the sequence illustrating the example of the method for executing the DAPS inter-SN CPC in the third embodiment.
FIG. 19 is a diagram of a first half of a sequence illustrating an example of a method for executing inter-MN HO with DAPS SN change in a fourth embodiment.
FIG. 20 is a diagram of a second half of the sequence illustrating the example of the method for executing the inter-MN HO with DAPS SN change in the fourth embodiment.

### Description of Embodiments

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

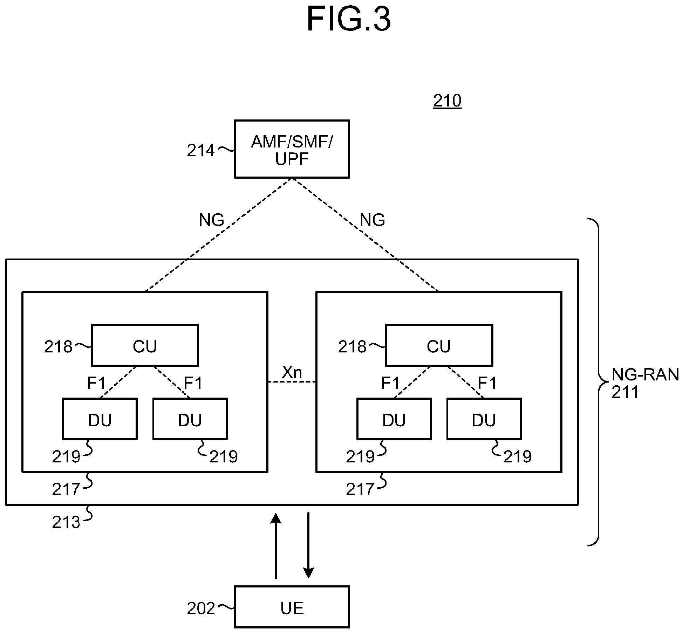

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

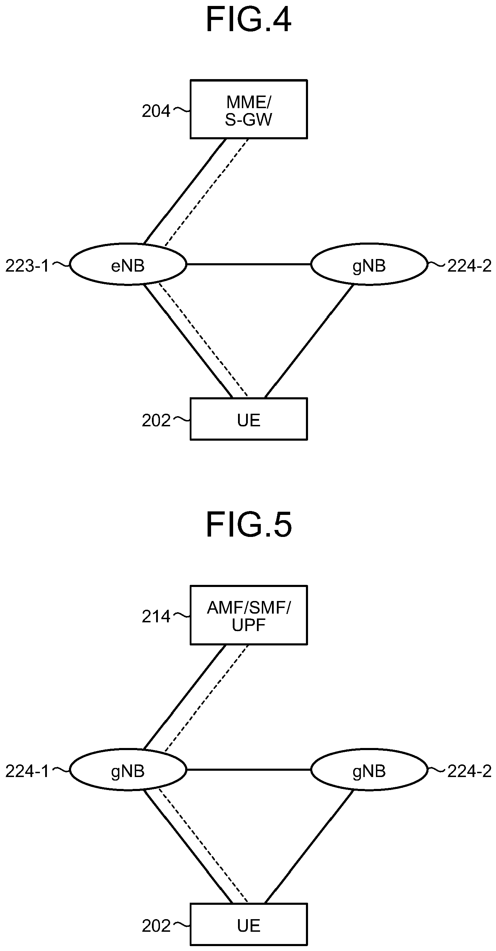

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

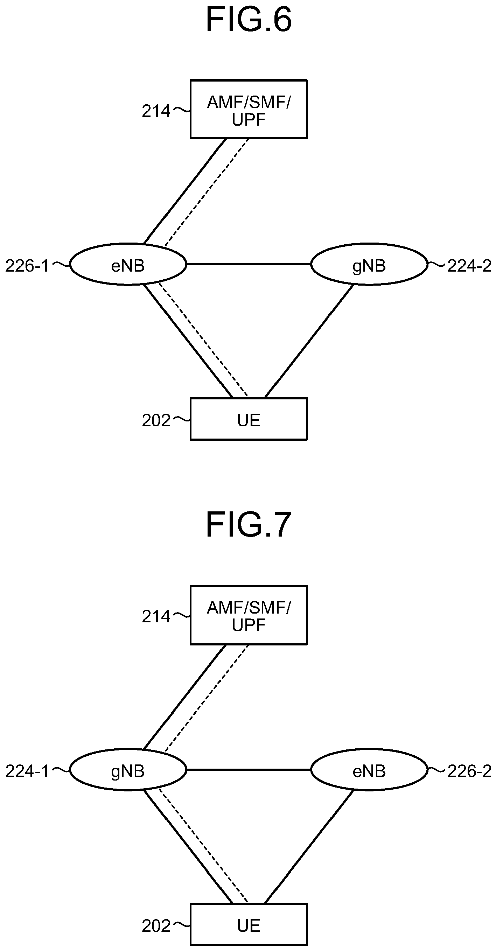

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

In DC, two base stations to be connected may be referred to as a master node (MN) and a secondary node (SN). The MN has a control plane (C-Plane) connection to a core network (CN). The MN may be a master cell group (MCG). For example, the MN may be a cell group configured by the MN. The SN may be a secondary cell group (SCG). For example, the SN may be a cell group configured by the SN.

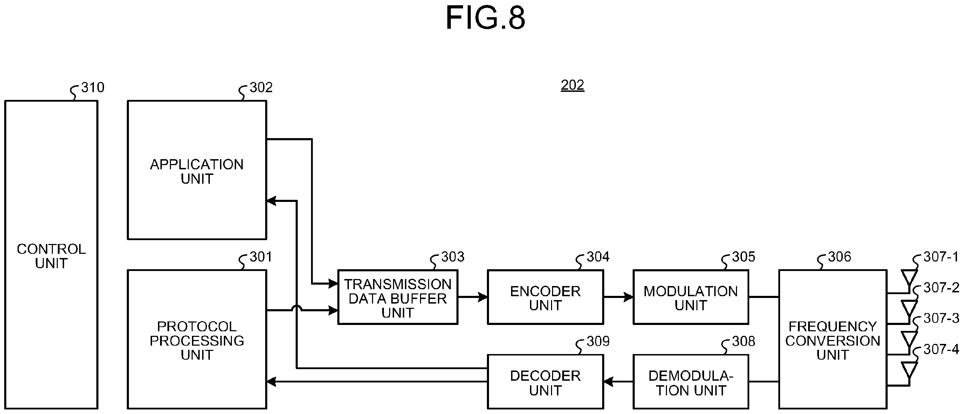

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

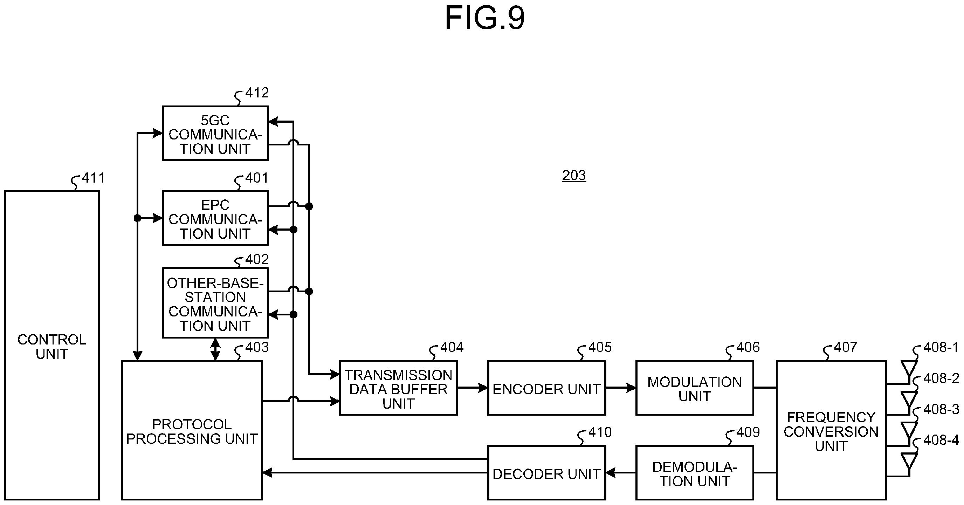

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

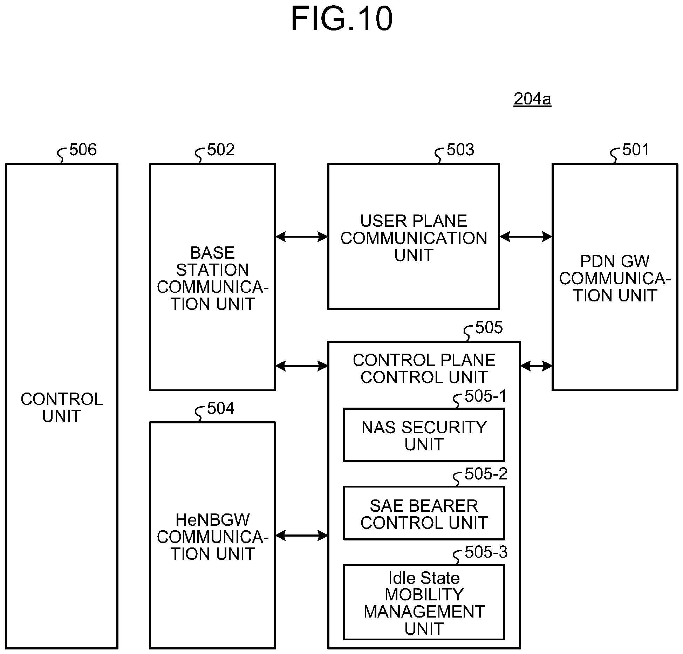

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

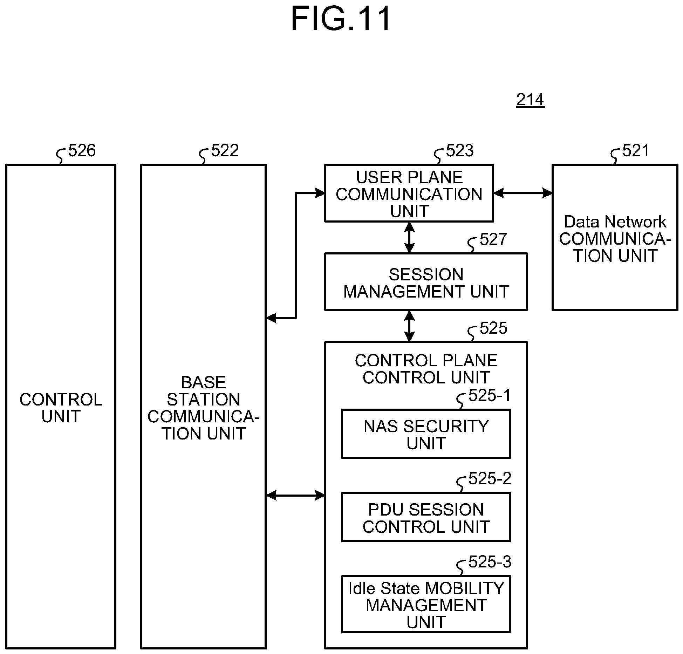

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

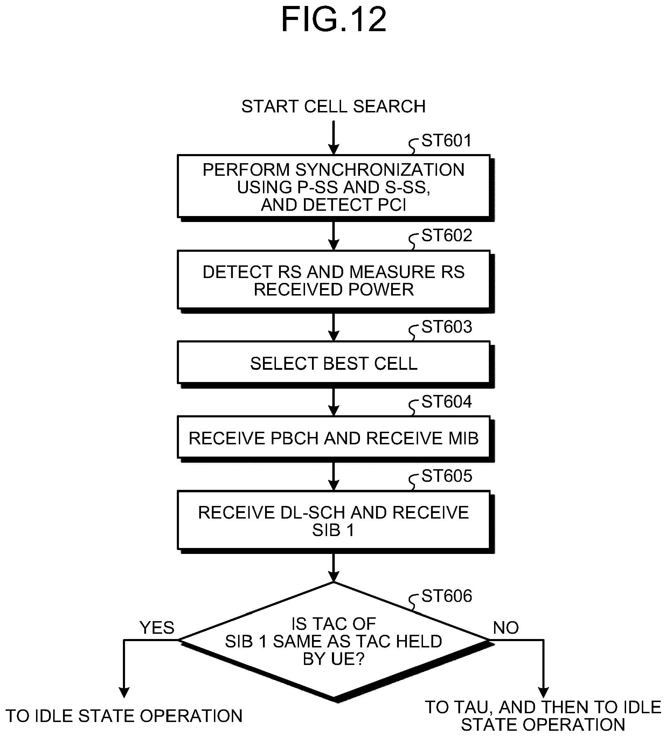

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core network-side device") updates the tracking area list on the basis of an identification number (such as a UE-ID) of a communication terminal transmitted from the communication terminal together with a TAU request signal. The core network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

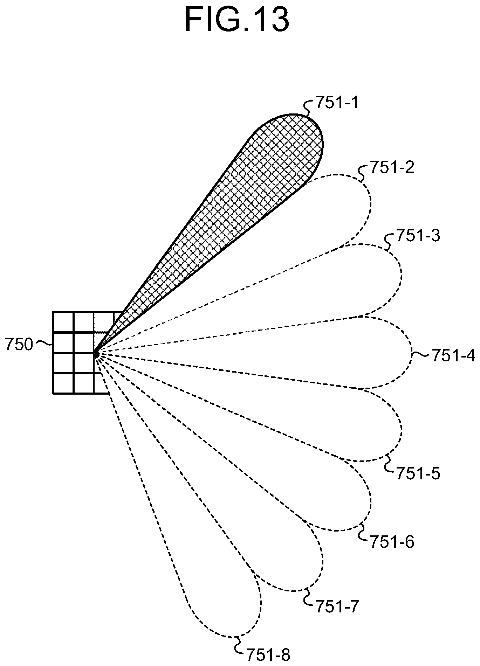

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also implemented by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In 5G, a dense network is formed with increasing frequency, and therefore, it is assumed that change of a base station and HO frequently occur. In such a network, it is required to reduce communication interruption time and to improve the robustness and reliability of communication. Therefore, 3GPP has proposed a study of, for example, a combination of DAPS HO and CHO as a mobility enhancement technology (Non Patent Literature 28 (3GPP RWS-210196) and Non Patent Literature 29 (3GPP RWS-210078)). However, there is no disclosure of a specific method of process in a case where DAPS HO and CHO are combined.

DAPS HO and CHO are individually configured conventionally, and thus cannot operate simultaneously. Therefore, there is a problem that a cooperative process in a case of combining DAPS HO and CHO cannot be executed, for example, by simply using a conventional method for execution order, an evaluation method, and the like. In addition, regarding the specific method of process in the case where DAPS HO and CHO are combined, there is no disclosure in standards and the like already established so far.

The first embodiment discloses a method for solving such a problem.

In order to solve the above problem, in the communication system according to the first embodiment, DAPS HO is executed during CHO of a gNB. The execution of the DAPS HO may be permitted during the CHO. A DAPS HO process may be triggered during the CHO. The DAPS HO process may be executed during a condition evaluation of the CHO. In a CHO process, the triggering of the DAPS HO may be permitted before an evaluation condition of any one of gNBs to be candidates for an HO destination is met in the UE.

The triggering of the CHO is preferably determined by a gNB as an HO source (source gNB (hereinafter, sometimes referred to as an S-gNB)). The S-gNB may determine the CHO for a UE by using a measurement report received from the UE. The triggering of the DAPS HO during the condition evaluation of the CHO is preferably determined by the S-gNB. The triggering of the DAPS HO for the UE may be determined by using the measurement report received from the UE. The UE may perform a measurement in the UE and a measurement report to the S-gNB during the execution of the CHO and while being connected to the S-gNB. Thus, the S-gNB can timely determine the triggering of the DAPS HO for the UE.

A gNB to be a candidate for an HO destination in the CHO (a target gNB (hereinafter, sometimes referred to as a T-gNB)) may be different from a gNB as an HO destination in the DAPS HO. The S-gNB can timely trigger the DAPS HO for a gNB better for the UE. The gNB as the HO destination in the DAPS HO may be included in gNBs to be candidates for the HO destination in the CHO. In the DAPS HO, part or all of an RRC configuration of the gNB as a DAPS HO destination may be omitted. It is possible to reduce signaling or information for the RRC configuration of the gNB as the HO destination between the S-gNB and the T-gNB and between the S-gNB and the UE.

The S-gNB may determine triggering of HO, triggering of CHO, or triggering of DAPS HO for the UE by using CSI received from the UE. In NR, the CSI may include reception quality information of a CSI-RS and/or reception quality information of an SSB (SS/PBCH block). The S-gNB may determine the triggering of the CHO or the triggering of the DAPS HO for the UE by using the reception quality information of the CSI-RS and/or the reception quality information of the SSB included in the CSI. The reception quality information may be RSRP, reference signal receive quality (RSRQ), SINR, or the like. It is possible to promptly follow deterioration of a communication environment and to improve the reliability of communication.

In a case where the DAPS HO is triggered during the condition evaluation of the CHO, the CHO is preferentially processed. In other words, the DAPS HO triggered during the condition evaluation of the CHO may be stopped during the execution of the CHO. Consequently, processes of the CHO and the DAPS HO are clarified, and thus malfunction can be reduced.

However, in the case of this method, even though the DAPS HO has been triggered, it is necessary to wait for the process of the DAPS HO. Although HO is required, a delay may occur, and thus communication quality may deteriorate. A method for solving such a problem will be disclosed.

In a case where the DAPS HO is triggered during the condition evaluation of the CHO, the DAPS HO is preferentially processed. In other words, the CHO is not executed during the execution of the DAPS HO triggered during the condition evaluation of the CHO. The CHO may be stopped. By stopping the CHO, a process such as a condition evaluation by the UE can be stopped. Therefore, power consumption of the UE can be reduced. In addition, since the necessity of simultaneous execution of the DAPS HO and the CHO is eliminated, complication of processes of the UE and the gNB can be prevented. It is possible to reduce malfunction in the UE and the gNB.

In a case where the CHO is stopped, the CHO may be canceled. The S-gNB notifies a gNB to be a candidate for the HO destination (T-gNB) of a message indicating cancel of the CHO.

Information for specifying the CHO may be provided. The information may be an identifier. In a case where the S-gNB determines the CHO, the information for specifying the CHO may be included in a CHO request message to be transmitted to the T-gNB to be a candidate. An HO Request message may be used as the CHO request message. The information for specifying the CHO may be included in a CHO cancel message to be transmitted from the S-gNB to the T-gNB to be a candidate. By making the information for specifying the CHO to be included in the CHO cancel message the same as the information for specifying the CHO included in the CHO request message, the T-gNB can recognize which CHO has been canceled.

The information for specifying the CHO may be configured by the S-gNB. The information may be a number not overlapping in the S-gNB.

In a case where the S-gNB determines to perform the CHO, information for specifying the S-gNB may be included in the CHO request message to be transmitted to the T-gNB to be a candidate. The information may be an identifier. The information for specifying the S-gNB may be included in the CHO cancel message to be transmitted from the S-gNB to the T-gNB to be a candidate. The T-gNB may use the information for specifying the S-gNB in order to recognize which CHO has been canceled. The information for specifying the CHO may be used in combination. Thus, the T-gNB can recognize which CHO configured by which S-gNB has been canceled.

Another method will be disclosed in which DAPS HO and CHO are combined. In the method, the DAPS HO is performed in the CHO. Hereinafter, performing DAPS HO in CHO is sometimes referred to as DAPS CHO. The DAPS CHO is preferably determined by the S-gNB. The DAPS CHO for the UE may be determined by using the measurement report received from the UE. The S-gNB may determine triggering of the DAPS CHO for the UE by using the CSI received from the UE. It is possible to promptly follow deterioration of a communication environment and to improve the reliability of communication. The S-gNB determines a candidate cell to be an HO destination in the CHO. Hereinafter, a gNB constituting a cell to be the HO destination is sometimes referred to as a target gNB (T-gNB). The S-gNB configures the DAPS CHO for all T-gNBs to be candidates. The S-gNB transmits a DAPS CHO configuration request to all T-gNBs to be candidates. The configuration of the DAPS CHO is preferably included in the DAPS CHO configuration request. As the configuration of the DAPS CHO, a configuration of the CHO and a configuration of the DAPS HO may be included. As the configuration of the CHO, for example, information indicating that the CHO has been triggered may be included in the DAPS CHO configuration request. As the configuration of the DAPS HO, for example, information indicating that the DAPS HO has been requested or information about a bearer that performs the DAPS HO may be included in the DAPS CHO configuration request.

Inter-base station signaling is preferably used for the transmission of the DAPS CHO configuration request. For example, Xn signaling may be used. A new message may be provided for the transmission of the DAPS CHO configuration request. It is possible to reduce malfunction with respect to a process by another message. Alternatively, an existing message may be used for the transmission of the DAPS CHO configuration request. For example, an HO Request message may be used. By using such an existing message, it is possible to reduce complication of processes.

A candidate T-gNB for which the DAPS CHO has been configured transmits an acknowledgement to the S-gNB. A candidate T-gNB for which the DAPS CHO is not configured transmits a reject response to the S-gNB. The reject response may include cause information. For example, information indicating that the DAPS CHO cannot be configured may be provided as the cause information. A DAPS CHO configuration request response may include the maximum number of cells to be CHO candidates, information about a bearer that performs the DAPS HO, and information indicating acceptance of a DAPS HO request.

Inter-base station signaling is preferably used for transmission of the DAPS CHO configuration request response. For example, Xn signaling may be used. A new message may be provided for the transmission of the DAPS CHO configuration request response. It is possible to reduce malfunction with respect to a process by another message. Alternatively, an existing message may be used for the transmission of the DAPS CHO configuration request response. For example, an HO Request Acknowledge message may be used for the acknowledgement, and an HO Request reject message may be used for the reject response. By using such an existing message, it is possible to reduce complication of processes.

The S-gNB performs data forwarding to all candidate T-gNBs before the UE connects to the T-gNB. The S-gNB performs data forwarding, before the UE connects to the T-gNB, to a candidate T-gNB from which the acknowledgement of the DAPS CHO configuration has been received. The S-gNB may not perform data forwarding, before the UE connects to the T-gNB, to a candidate T-gNB from which the DAPS CHO configuration reject response has been received. The data forwarding is preferably performed on downlink (DL) data. In order to perform the data forwarding, the S-gNB transmits EARLY STATUS TRANSFER to the candidate T-gNBs.

Three examples of information to be included in the EARLY STATUS TRANSFER will be disclosed below.
(1) Sequence number (SN) of a first PDCP SDU to be transferred (forwarded) from the S-gNB to the T-gNB.
(2) Hyper frame number (HFN) of the first PDCP SDU to be transferred (forwarded) from the S-gNB to the T-gNB.
(3) A combination of (1) and (2).

These pieces of information may be included in DL COUNT information to be included in the EARLY STATUS TRANSFER. The EARLY STATUS TRANSFER may not include UL SN STATUS.

EARLY STATUS TRANSFER to be transmitted to each candidate T-gNB may not include UPLINK SN STATUS.

After transmitting EARLY STATUS TRANSFER, the S-gNB starts data forwarding to each candidate T-gNB. The S-gNB continuously allocates an SN to DL data received from a UPF and performs forwarding thereof to each candidate T-gNB. In a case where there are a plurality of candidate T-gNBs, the S-gNB may duplicate the DL data from the UPF. The S-gNB may duplicate the SN allocated to the DL data. The S-gNB preferably makes duplicates as many as the number of candidate T-gNBs. The S-gNB forwards the DL data and the SNs thus duplicated to the candidate T-gNBs.

The S-gNB continues DL transmission and/or UL reception with the UE also after receiving DAPS CHO configuration responses from the candidate T-gNBs or after transmitting EARLY STATUS TRANSFER to the candidate T-gNBs. In other words, the S-gNB does not stop the DL transmission and/or the UL reception with the UE when receiving the DAPS CHO configuration request responses from the candidate T-gNBs or when transmitting EARLY STATUS TRANSFER to the candidate T-gNBs. The S-gNB continues the DL transmission and/or the UL reception until receiving an HO success message from the T-gNB.

The S-gNB continues the DL transmission and/or the UL reception with the UE until receiving the HO success message from the T-gNB employed as an HO destination by the condition evaluation of the CHO. The S-gNB stops the DL transmission and/or the UL reception with the UE when receiving the HO success message from the T-gNB.

The candidate T-gNBs buffer the DL data forwarded from the S-gNB. Among the candidate T-gNBs that have buffered the forwarded DL data, the T-gNB employed as the HO destination by the condition evaluation of the CHO transmits the DL data to the UE after connecting to the UE. A T-gNB not employed as the HO destination may discard the buffered DL data after receiving an HO cancel message from the S-gNB.

After receiving a DAPS CHO instruction from the S-gNB, the UE continues DL reception and/or UL transmission with the S-gNB. In other words, the UE does not stop the DL reception and/or the UL transmission with the S-gNB when receiving the DAPS CHO instruction from the S-gNB. The UE employs, as the HO destination, a T-gNB that meets a condition by the condition evaluation of the CHO. The UE performs a random access (RA) procedure with the T-gNB employed as the HO destination. The UE stops the DL reception and/or the UL transmission with the S-gNB when succeeding in the RA procedure with the T-gNB employed as the HO destination. Alternatively, the UE stops the DL reception and/or the UL transmission with the S-gNB in a case of receiving an S-gNB release request from the T-gNB after succeeding in the RA procedure with the T-gNB employed as the HO destination. An RRC message may be used for transmission of the S-gNB release request. For example, the request may be included in an RRC reconfiguration message.

The S-gNB that has received the HO success message from the T-gNB performs data forwarding to the T-gNB employed as the HO destination by the CHO condition evaluation. The data forwarding is preferably performed on downlink data. In order to perform the data forwarding, the S-gNB transmits SN STATUS TRANSFER to the T-gNB employed as the HO destination.

After transmitting SN STATUS TRANSFER, the S-gNB starts data forwarding to the T-gNB employed as the HO destination. The S-gNB forwards DL data received from the UPF to the T-gNB employed as the HO destination.

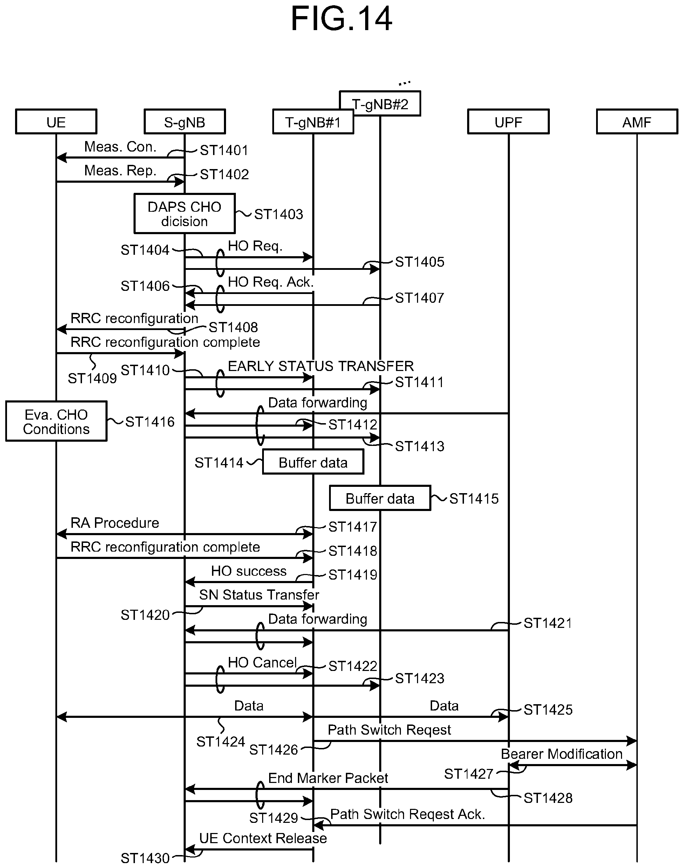

FIG. 14 is a sequence diagram illustrating an example of a method for executing DAPS CHO in the first embodiment. FIG. 14 discloses a method in a case where the S-gNB performs data forwarding to all candidate T-gNBs before the UE connects to the T-gNB. In step ST1401, the S-gNB transmits a measurement configuration to the UE. Measurement Configuration (Meas. Con.) may be used for the transmission. The measurement configuration may include a measurement configuration for the CHO condition evaluation. An identifier is preferably assigned to the measurement configuration. The UE performs measurement in accordance with the measurement configuration, and transmits a result of the measurement to the S-gNB in step ST1402. Measurement Report (Meas. Rep.) may be used for the transmission.

In step ST1403, the S-gNB determines to execute a CHO process by DAPS HO (DAPS CHO) for the UE. The S-gNB may use the measurement result received from the UE in step ST1402 in the determination. The S-gNB determines one or a plurality of target PCells (hereinafter sometimes referred to as T-PCells) to be candidates in the CHO. One or a plurality of T-gNBs to be candidates in the CHO may be determined. For example, a master node (MN) constituting a T-PCell to be a candidate in the CHO may be determined as the T-gNB. In this example, T-gNB #1 (T-PCell #1) and T-gNB #2 (T-PCell #2) are each the T-PCell to be a candidate in the CHO. The S-gNB determines to perform a DAPS configuration on all T-gNBs to be candidates in the CHO.

The S-gNB transmits a DAPS CHO configuration request to candidate T-gNB #1 and T-gNB #2 in steps ST1404 and ST1405, respectively. Xn signaling may be used for the transmission of the request. A new message may be provided. Alternatively, an existing message may be used. For example, an HO Request (HO Req.) message may be used. Here, a case will be disclosed where the HO Request message is used. As the DAPS CHO configuration request, the DAPS CHO configuration is preferably included in the HO Request message. For example, the HO Request message preferably includes both the configuration of the DAPS HO and the configuration of the CHO. Consequently, candidate T-gNB #1 and T-gNB #2 can each recognize that it is a DAPS CHO request.

Candidate T-gNB #1 and T-gNB #2 that each have received the DAPS CHO configuration request from the S-gNB determine whether the DAPS CHO configuration can be accepted. Candidate T-gNB #1 and T-gNB #2 that have determined that the DAPS CHO configuration can be accepted respectively transmit, to the S-gNB in steps ST1406 and ST1407, acknowledgements to the DAP CHO configuration requests. Xn signaling may be used for the transmission of the acknowledgements. A new message may be provided. Alternatively, an existing message may be used. For example, an HO Request Acknowledge (HO Req. Ack.) message may be used. DAPS configuration acceptance information and/or CHO acceptance information is preferably included in the message. Consequently, the S-gNB that has received the acknowledgements from the candidate T-gNBs can recognize which configuration the candidate T-gNBs can accept. As another method, in a case of the acknowledgement, both the DAPS configuration acceptance information and the CHO acceptance information may be included, and in a case of the reject response, either one of the pieces of the information may be included, neither of the pieces of the information may be included, or reject information for both thereof may be included. Consequently, the S-gNB that has received the acknowledgements from the candidate T-gNBs can recognize whether the T-gNBs can accept the DAPS CHO configuration.

The S-gNB that has received the acknowledgements to the DAPS CHO configuration requests from the candidate T-gNBs in steps ST1406 and ST1407 transmits a DAPS CHO instruction to the UE in step ST1408. RRC signaling is preferably used for the transmission. For example, an RRC reconfiguration message may be used. The message preferably includes information indicating that it is CHO by DAPS. In addition, the message preferably includes information about the candidate T-gNBs. Examples of the information include an identifier, an RRC configuration, and an evaluation condition configuration of each of the candidate T-gNBs. The RRC configuration may include information about a DAPS bearer that performs the DAPS CHO.

The UE may not execute the RRC configuration of one or a plurality of T-gNBs received from the S-gNB until a T-gNB as the HO destination is determined by the condition evaluation of the CHO, and in a case where the T-gNB as the HO destination is determined, the UE may execute the RRC configuration of the T-gNB. It is possible to avoid complication of processes performed by the UE. As another method, the UE may execute the RRC configuration of one or a plurality of candidate T-gNBs received from the S-gNB before the T-gNB as the HO destination is determined by the condition evaluation of the CHO. The UE may release the RRC configuration of another candidate T-gNB in a case where the T-gNB as the HO destination is determined or a case of succeeding in the RA procedure with the T-gNB as the HO destination. An HO process can be performed at an early stage in the case where the T-gNB as the HO destination is determined.

In a case where the acknowledgements to the DAPS CHO configuration requests from the candidate T-gNBs are received in steps ST1406 and ST1407, the S-gNB does not stop DL/UL transmission/reception with the UE. Alternatively, in a case where the DAPS CHO instruction is transmitted to the UE in step ST1408, the S-gNB may not stop the DL/UL transmission/reception with the UE. The S-gNB continuously allocates the SN and/or the HFN to the DL data received from the UPF. That is, the S-gNB adds the SN and/or the HFN to the DL data from the UPF and continues transmission to the UE. Thus, the S-gNB can continue the DL/UL transmission/reception with the UE during the execution of the DAPS CHO.

The UE that has received the DAPS CHO instruction in step ST1408 configures the DAPS CHO. The UE that has received the DAPS CHO instruction in step ST1408 does not stop UL/DL transmission/reception with the S-gNB. The UE continuously performs the UL/DL transmission/reception with the S-gNB. The UE that has configured the DAPS CHO transmits completion of the configuration to the S-gNB in step ST1409. RRC signaling may be used for the transmission of the completion of the configuration. For example, completion of the transmission may be included in an RRC reconfiguration complete message. The S-gNB can recognize that the UE has completed the configuration of the DAPS CHO.

The S-gNB that has received the completion of the configuration of the DAPS CHO from the UE in step ST1409 transmits EARLY STATUS TRANSFER to the candidate T-gNBs in steps ST1410 and ST1411. The EARLY STATUS TRANSFER is preferably transmitted before the UE connects to the T-gNB. The S-gNB may transmit EARLY STATUS TRANSFER to the candidate T-gNBs not when receiving the completion of the configuration in step ST1409 but when transmitting the DAPS CHO instruction in step ST1408 or when receiving the acknowledgements to the DAPS CHO configuration requests in steps ST1406 and ST1407. It is possible to transmit EARLY STATUS TRANSFER to the candidate T-gNBs at an earlier stage, and to start data forwarding.

EARLY STATUS TRANSFER preferably includes the SN and/or the HFN of the first PDCP SDU to be transferred from the S-gNB to the candidate T-gNBs. It is preferable to transmit, to each of the candidate T-gNBs, EARLY STATUS TRANSFER including the same SN and/or the same HFN. Data forwarding control is facilitated.

EARLY STATUS TRANSFER to be transmitted from the S-gNB to the candidate T-gNBs may not include UL SN STATUS. DL and UL are preferably separated in EARLY STATUS TRANSFER to be transmitted to the candidate T-gNBs as described above. Regarding the DL, it is possible to determine the SN and/or the HFN of which transfer to the candidate T-gNBs is started at an early stage, and to perform notification to the candidate T-gNBs by using EARLY STATUS TRANSFER. Regarding the UL, since SN STATUS does not need to be included in EARLY STATUS TRANSFER to be transmitted to the candidate T-gNBs, it is not necessary to determine the SN of UL data, and continuous transmission from the UE can be performed.

The S-gNB that has transmitted EARLY STATUS TRANSFER to the candidate T-gNBs transfers (forwards) the DL data from the UPF to the candidate T-gNBs in steps ST1412 and ST1413. The S-gNB duplicates the DL data received from the UPF, adds the same SN and the same HFN thereto, and transmits the data to the candidate T-gNBs. In steps ST1414 and ST1415, the candidate T-gNBs buffer the transferred data received from the S-gNB.

Thus, the S-gNB can perform data forwarding, before the UE connects to the T-gNB, to the candidate T-gNBs configured in the DAPS CHO. Any T-gNB among the candidate T-gNBs can transmit data to the UE at an early stage after connecting to the UE by the DAPS CHO.

In step ST1416, the UE performs a condition evaluation in the DAPS CHO on each of the candidate T-gNBs. In a case where any of the candidate T-gNBs satisfies an evaluation condition, the UE performs, in step ST1417, the RA procedure on the T-gNB satisfying the evaluation condition. In this example, the T-gNB satisfying the evaluation condition is T-gNB #1. In step ST1418, the UE transmits an RRC reconfiguration complete message to T-gNB #1.

The UE may stop the UL/DL transmission/reception with the S-gNB when succeeding in the RA procedure with T-gNB #1. As another method, T-gNB #1 may transmit an S-gNB release request to the UE to cause the UE to stop the UL/DL transmission/reception with the S-gNB. For example, T-gNB #1 may transmit the S-gNB release request in MSG4 of the RA procedure in step ST1417. Alternatively, the S-gNB release request may be transmitted after the RA procedure in step ST1417 is finished. Alternatively, the S-gNB release request may be transmitted after receiving the RRC reconfiguration complete in step ST1418. In a case of receiving the S-gNB release request, the UE stops the UL/DL transmission/reception with the S-gNB. Thus, the UE can stop the UL/DL transmission/reception with the S-gNB continued after the reception of the DAPS CHO instruction in step ST1408.

After succeeding in the RA procedure in step ST1417 or after receiving the RRC reconfiguration complete in step ST1418, T-gNB #1 transmits an HO success message to the S-gNB in step ST1419. Consequently, the S-gNB can recognize that the RA procedure has succeeded between the UE and T-gNB #1 or that the UE and T-gNB #1 have been connected. The S-gNB that has recognized that the RA procedure has succeeded between the UE and T-gNB #1 or that the UE and T-gNB #1 have been connected stops the DL/UL transmission/reception with the UE. Consequently, the S-gNB can stop the DL/UL transmission/reception with the UE continued after the reception of the acknowledgements to the DAPS CHO requests in steps ST1406 and ST1407.

The S-gNB that has recognized that the UE and T-gNB #1 have been connected performs data forwarding after the UE connects to T-gNB #1. The S-gNB transmits SN Status Transfer to T-gNB #1 to which the UE has been connected in step ST1420, and transfers the DL data from the UPF to T-gNB #1 in step ST1421. Thus, it is possible to transfer the DL data after transmission and reception from the S-gNB to the UE are stopped and before the UPF performs a path switch to T-gNB #1.

In steps ST1422 and ST1423, the S-gNB transmits cancel of the DAPS CHO configuration to candidate T-gNB #1 and T-gNB #2. Xn signaling may be used for the transmission. A new message may be provided. Alternatively, an existing message may be used. For example, an HO cancel message may be used. The message may include information indicating to which cell the UE has performed the DAPS CHO. The candidate T-gNBs that each have received the message release the DAPS CHO configuration. Thus, usage efficiency of resources can be improved.

The S-gNB may not transmit the cancel of the DAPS CHO configuration to candidate T-gNB #1. The cancel of the DAPS CHO configuration may be transmitted only to a candidate T-gNB not employed as an HO destination in the DAPS CHO. The candidate T-gNB employed as the HO destination in the DAPS CHO is only required to recognize that the T-gNB itself has executed the HO with the UE when succeeding in the RA procedure with the UE, receiving the RRC reconfiguration complete, or receiving the transfer data from the S-gNB. The necessity of the cancel of the DAPS CHO configuration can be eliminated.

Another method for canceling the DAPS HO configuration will be disclosed. DAPS CHO candidate T-gNBs may release the DAPS HO configuration after the elapse of a predetermined time from the reception of the DAPS CHO configuration requests in steps ST1404 and ST1405, after the elapse of a predetermined time from the performance of the DAPS HO configuration, or after the elapse of a predetermined time from the transmission of the DAPS HO configuration request acknowledgements in steps ST1406 and ST1407. The predetermined time may be managed by a timer. In that case, the DAPS CHO candidate T-gNBs start the timer in a case where the DAPS CHO configuration requests are received in steps ST1404 and ST1405, a case where the DAPS HO configuration is performed, or a case where the DAPS HO configuration request acknowledgements are transmitted in steps ST1406 and ST1407. The DAPS CHO candidate T-gNBs release the DAPS HO configuration in a case where the timer expires. A candidate T-gNB that has succeeded in the RA procedure with the UE or has received the RRC Reconfiguration Complete message from the UE before the timer expires executes a process as the T-gNB as the HO destination of the UE. Thus, signaling for canceling the DAPS HO can be reduced.

The predetermined time or the timer may be configured by the S-gNB. It is possible to perform a configuration suitable for the UE to be a target of the DAPS HO. As another method, the predetermined time or the timer may be configured by a node of the core network. For example, the configuration may be performed by an operation management node or a maintenance node. The predetermined time or the timer is preferably transmitted from the node to the S-gNB in advance. It is possible to execute a configuration suitable for each gNB as a system. As another method, the configuration of the predetermined time or the timer may be statically determined in a standard or the like. Since the necessity of the configuration is eliminated, the amount of signaling can be reduced.

In step ST1424, transmission and reception of data are performed between the UE and T-gNB #1. In addition, in step ST1425, transmission and reception of UL data are performed from T-gNB #1 to the UPF. In steps ST1426 to ST1429, a path switch from the S-gNB to T-gNB #1 is performed among T-gNB #1, the AMF, the UPF, and the S-gNB. After the path switch is completed, T-gNB #1 transmits UE Context Release to the S-gNB in step ST1430. The S-gNB performs release of UE context.

Thus, the DAPS HO can be executed on the UE in the CHO in which there are a plurality of T-gNBs as candidates.

In the method disclosed above, it has been described that the S-gNB configures the DAPS CHO for all T-gNBs to be candidates. Here, a first other method of the DAPS CHO configuration will be disclosed. As the first other method, the S-gNB may configure the DAPS CHO for some gNBs out of the T-gNBs to be candidates in the CHO. The S-gNB transmits a DAPS CHO configuration request to some gNBs out of the T-gNBs to be candidates in the CHO. The configuration of the DAPS CHO is preferably included in the DAPS CHO configuration request. As the configuration of the DAPS CHO, the configuration of the CHO and the configuration of the DAPS HO may be included.

The DAPS CHO is preferably configured by the S-gNB. A T-gNB for which the DAPS CHO is configured may be selected from candidate T-gNBs for which the CHO is configured. The S-gNB selects a candidate T-gNB for which the DAPS CHO is configured from candidate T-gNBs for which the CHO is configured. The S-gNB transmits a DAPS CHO configuration request to the selected candidate T-gNB. Thus, both the DAPS and the CHO configurations can be performed together for the selected candidate T-gNB.

As another method, the T-gNB for which the DAPS CHO is configured may be selected from candidate T-gNBs from which the S-gNB has received the acknowledgements of a CHO configuration. After receiving the acknowledgements of the CHO configuration, the S-gNB selects the T-gNB for which the DAPS CHO is configured from candidate T-gNBs from which the acknowledgements have been received. The S-gNB transmits a DAPS CHO configuration request to the selected T-gNB. Thus, the S-gNB can wastelessly select the T-gNB for which the DAPS CHO is configured from candidate T-gNBs from which the CHO configuration acknowledgements have been received.

The CHO configuration and the DAPS HO configuration may be executed individually. The S-gNB may individually transmit the CHO configuration and the DAPS CHO configuration to the selected T-gNB. The S-gNB may separately perform the transmission of the CHO configuration and the transmission of the DAPS HO configuration to the T-gNB selected as the DPAS CHO candidate T-gNB. For example, in the above-disclosed case where after receiving the acknowledgements of the CHO configuration, the S-gNB selects a candidate T-gNB for which the DAPS CHO is configured, the S-gNB may transmit the CHO configuration to a CHO candidate T-gNB, and after receiving an acknowledgement of the CHO configuration, the S-gNB may select a candidate T-gNB for which the DAPS HO is configured and transmit the DAPS HO configuration to the candidate T-gNB.

The T-gNB for which the DAPS CHO is configured may be determined independently of a T-gNB for which EARLY STATUS TRANSFER is performed in the CHO. A T-gNB for which EARLY STATUS TRANSFER by the DAPS CHO is performed and a T-gNB for which EARLY STATUS TRANSFER by the CHO is performed may be different from each other. TgNBs for which the DAPS CHO is configured may include a T-gNB for which EARLY STATUS TRANSFER is performed in the CHO.

The T-gNB for which the DAPS HO is configured may be determined independently of the T-gNB for which EARLY STATUS TRANSFER is performed in the CHO. A T-gNB for which EARLY STATUS TRANSFER by the DAPS CHO is performed and a T-gNB for which EARLY STATUS TRANSFER by the CHO is performed may be different from each other. T-gNBs for which the DAPS HO is configured may include a T-gNB for which EARLY STATUS TRANSFER is performed in the CHO.

Information regarding whether to reset the CHO configuration may be provided. Information regarding whether to reset the CHO configuration to the DAPS HO configuration may be included. By including the information regarding whether to reset the CHO configuration to the DAPS HO configuration, for example, the T-gNB that has received the DAPS HO configuration can determine whether to reset the CHO configuration that has already been received.

Information regarding whether to reset the DAPS HO configuration may be provided. Information regarding whether to reset the DAPS HO configuration to the CHO configuration may be included. By including the information regarding whether to reset the DAPS HO configuration to the CHO configuration, for example, the T-gNB that has received the CHO configuration can determine whether to reset the DAPS HO configuration that has already been received.

In a case where the same message is used for transmissions of the CHO configuration and the DAPS HO configuration, the message may include information regarding whether to reset the CHO configuration and/or information regarding whether to reset the DAPS HO configuration. For example, in a case where the T-gNB first receives the CHO configuration by using the message and later receives the DAPS HO configuration by using the message, it is possible to determine whether to reset the CHO configuration received first.

Thus, the S-gNB can flexibly select the T-gNB for which the DAPS CHO is configured. The S-gNB can flexibly configure the DAPS CHO for the T-gNB.

The S-gNB performs data forwarding to the T-gNB for which the DAPS CHO has been configured, before the UE connects to the T-gNB. Regarding a method for transmitting EARLY STATUS TRANSFER for data forwarding and a data forwarding method, it is preferable to appropriately apply the methods disclosed above.

In a case where the DAPS HO configuration is performed for a T-gNB cell satisfying the evaluation condition in the CHO, the above-disclosed process such as that in FIG. 14 is preferably executed. In a case where the DAPS HO configuration is not performed for a T-gNB satisfying the evaluation condition in the CHO, it is preferable to appropriately apply a conventional CHO process.

As described above, in the first other method of the DAPS CHO configuration, the S-gNB configures the DAPS CHO for some T-gNBs out of the T-gNBs to be candidates in the CHO. As the first other method, a point different from the above-disclosed method in which the S-gNB configures the DAPS CHO for all T-gNBs to be candidates in the CHO has been mainly disclosed. For other points, it is preferable to appropriately apply the method in which the S-gNB configures the DAPS CHO for all T-gNBs to be candidates in the CHO.

Thus, the S-gNB can flexibly select the T-gNB for which the DAPS CHO is configured. The DAPS CHO can be configured in consideration of a signaling load, a load on the gNB, and the like in addition to a radio wave propagation environment.

In the above-disclosed first other method of the DAPS CHO configuration, it has been described that the S-gNB configures the DAPS CHO for some T-gNBs out of the T-gNBs to be candidates in the CHO. Here, a second other method of the DAPS CHO configuration will be disclosed. As the second other method, the S-gNB may configure the DAPS CHO for any one T-gNB out of the T-gNBs to be candidates in the CHO. The S-gNB transmits a DAPS CHO configuration request to any one gNB out of the T-gNBs to be candidates in the CHO. As the configuration of the DAPS CHO to be included in the DAPS CHO configuration request, the configuration of the CHO and the configuration of the DAPS HO may be included.

The S-gNB performs data forwarding to the candidate T-gNB for which the DAPS CHO has been configured, before the UE connects to the candidate T-gNB. Regarding a method for transmitting EARLY STATUS TRANSFER for data forwarding and a data forwarding method, it is preferable to appropriately apply the methods disclosed above.

The T-gNB for which the DAPS CHO is configured may be determined independently of the T-gNB for which EARLY STATUS TRANSFER is performed in the CHO. A T-gNB for which EARLY STATUS TRANSFER by the DAPS CHO is performed and a T-gNB for which EARLY STATUS TRANSFER by the CHO is performed may be different from each other.

The TgNB for which the DAPS CHO is configured may be the T-gNB for which EARLY STATUS TRANSFER is performed in the CHO. In that case, the process is facilitated.

The T-gNB for which the DAPS HO is configured may be determined independently of the T-gNB for which EARLY STATUS TRANSFER is performed in the CHO. A T-gNB for which EARLY STATUS TRANSFER by the DAPS CHO is performed and a T-gNB for which EARLY STATUS TRANSFER by the CHO is performed may be different from each other.

The T-gNB for which the DAPS HO is configured may be the T-gNB for which EARLY STATUS TRANSFER is performed in the CHO. In that case, the process is facilitated.

As described above, in the second other method of the DAPS CHO configuration, the S-gNB configures the DAPS CHO for any one T-gNB out of the T-gNBs to be candidates in the CHO. As the second other method, a point different from the above-disclosed method in which the S-gNB configures the DAPS CHO for some gNBs out of the T-gNBs to be candidates in the CHO has been mainly disclosed. For other points, it is preferable to appropriately apply the method in which the S-gNB configures the DAPS CHO for some gNBs out of the T-gNBs to be candidates in the CHO.

Thus, since the S-gNB can employ one candidate T-gNB as a target of the transmission of EARLY STATUS TRANSFER and the data forwarding to be performed before the UE connects to the T-gNB, it is possible to avoid complication of a DAPS CHO process.

The above-disclosed three methods of DAPS CHO configuration may be combined. The DAPS CHO may be configured for all the T-gNBs to be candidates in the CHO, the DAPS CHO may be configured for some T-gNBs, or the DAPS CHO may be configured for any one T-gNB. The number of T-gNBs for which the DAPS CHO is configured may be configurable. For example, the S-gNB may perform the configuration. For example, a node of the core network or a node for management or maintenance may perform the configuration. The node preferably transmits the configuration to the gNB. The gNB preferably executes the DAPS CHO by using the three methods of the DAPS CHO configuration disclosed above. Thus, the number of T-gNBs for which the DAPS CHO is configured can be flexibly changed. For example, even in a case where a dense NW is configured, flexible control can be performed depending on the disposition of the T-gNB, the radio wave propagation environment, a communication load situation, and the like.

With the disclosure of the first embodiment, it is possible to perform a process of the DAPS CHO in which the DAPS HO and the CHO are combined. One or a plurality of candidate T-gNBs can be configured in the HO process, and no matter which T-gNB is selected by the UE from the one or the plurality of candidate T-gNBs, the DAPS HO can be executed to the candidate T-gNB. Therefore, for example, even in a case where the dense NW is configured, communication interruption time due to the HO can be reduced, and the robustness and the reliability at the time of the HO process can be improved.

### Second Embodiment.

In a dense network in 5G, it is required to reduce communication interruption time and to improve the robustness and reliability of communication. Therefore, a mobility enhancement technology and a DC enhancement technology are required in 3GPP. In DC, when a secondary node (SN) change process (SN change) is performed, communication interruption time occurs before connection to an SN after change (target SN (hereinafter, sometimes referred to as a T-SN)) is established. During the interruption of communication with the SN, communication is performed only with the MN, and thus a high communication capacity cannot be maintained even though DC is configured. Therefore, it is required to reduce the communication interruption time at the time of the SN change process in DC.

The second embodiment discloses a method for solving such a problem.

In order to solve the above problem, in the communication system according to the second embodiment, the DAPS configuration is performed in the SN change process in DC. In the following description, a process of performing the DAPS configuration at the time of the SN change process in DC is sometimes referred to as DAPS SN change. The DAPS SN change process has two active protocol stacks for the SN. It is possible to activate both SNs, i.e., an SN before change (source SN (hereinafter, sometimes referred to as an S-SN)) and the T-SN in the SN change in DC.

The master node (MN) transmits a DAPS SN change request to the T-SN in the SN change process in DC. Inter-base station signaling is preferably used for the transmission of the change request. For example, Xn signaling may be used. A new message may be provided for the transmission of the change request. It is possible to reduce malfunction with respect to a process by another message. Alternatively, an existing message may be used for the transmission of the change request. For example, an S-node (SN) addition request message may be used. In the existing message, the SN may be described as S-node. By using such an existing message, it is possible to reduce complication of processes.

In order to notify that the DAPS SN change is triggered from the MN to the S-SN, a DAPS SN change request is preferably provided. The MN transmits the DAPS SN change request to the S-SN. Consequently, the S-SN can recognize that the DAPS SN change has been triggered. Inter-base station signaling is preferably used for the transmission of the change request. For example, Xn signaling may be used. A new message may be provided for the transmission of the change request. For example, the new message may be a DAPS SN change request message. It is possible to reduce malfunction with respect to a process by another message. Alternatively, an existing message may be used for the transmission of the change request. For example, an SN release request message may be used. By using such an existing message, it is possible to reduce complication of processes.

In a case where the DAPS SN change request is transmitted by using the SN Release request message, for example, UE Context Kept Indicator is preferably set to true. Consequently, the S-SN can maintain the UE Context by the DAPS SN change request.

Eight examples of information to be included in the DAPS SN change request will be disclosed below.
(1) Information about the T-SN.
(2) EARLY STATUS TRANSFER transmission request.
(3) Data forwarding request before the UE connects to the T-SN.
(4) Information about the UE to be a target of the DAPS SN change.
(5) Information about the MN.
(6) Information about a DC configuration.
(7) Information about a DAPS configuration.
(8) A combination of (1) to (7) .

The information of (1) may be an identifier of the T-SN or an RRC configuration of the T-SN. The information of (4) may be an identifier of the UE. The information of (5) may be an identifier of the MN. The information of (6) may be RRC configuration information, for example, a radio bearer (RB) configuration, a PDCP configuration, an SDAP configuration, or a cell group configuration. In addition, the information of (6) may be information about a bearer configured in DC, for example, information about an RLC bearer, information about a terminated bearer, information about whether the bearer is an MCG bearer, an SCG bearer, or a split bearer, or an identifier of the bearer. The information of (6) may be a combination of these. The information of (7) may be information on a bearer for which the DAPS is configured. For example, the information of (7) may be an identifier of a bearer for which the DAPS is configured or information about an RLC bearer. For example, a bearer identifier of the information about the DC configuration of (6) may be used.

Information for requesting stop of DL transmission and/or UL reception with the UE is provided. Hereinafter, the information is sometimes referred to as DL/UL transmission/reception with UE stop request information. The MN transmits the DL/UL transmission/reception with UE stop request information to the S-SN. Inter-base station signaling is preferably used for the transmission of the information. For example, Xn signaling may be used. A new message may be provided for the transmission of the information. It is possible to reduce malfunction with respect to a process by another message. Alternatively, an existing message may be used for the transmission of the information. For example, an S-node (SN) release request message may be used. By using such an existing message, it is possible to reduce complication of processes.

Information indicating that retention of UE context information is requested may be provided. Hereinafter, the information is sometimes referred to as UE context retention request information. As the information, UE Context Kept Indicator which is existing information may be used. The UE context retention request information may be included in the DL/UL transmission/reception with UE stop request information and transmitted, or may be included in the same message together with the DL/UL transmission/reception with UE stop request information and transmitted.

The MN does not transmit the DL/UL transmission/reception with UE stop request information to the S-SN before executing the SN change on the UE. The MN transmits the DL/UL transmission/reception with UE stop request information to the S-SN after executing the SN change on the UE. The MN transmits the DL/UL transmission/reception with UE stop request information to the S-SN after receiving an SN change configuration complete message from the UE. RRC signaling may be used for the transmission of the SN change configuration complete message from the UE to the MN. An RRC reconfiguration complete message may be used for the transmission of the message. The above is applicable also to a case where SN change success information is not provided. As another method, the MN may transmit the DL/UL transmission/reception with UE stop request information to the S-SN after receiving the SN change success information from the T-SN. Xn signaling may be used for transmission of the SN change success information from the T-SN to the MN. A new message may be provided for the transmission of the SN change success information from the T-SN to the MN. For example, the new message may be an SN change success message.

The S-SN that has received the DL/UL transmission/reception with UE stop request information from the MN stops DL transmission to the UE. The S-SN that has received the DL/UL transmission/reception with UE stop request information from the MN stops UL reception from the UE. In other words, the S-SN does not stop the DL/UL transmission/reception with the UE until timing of receiving the DL/UL transmission/reception stop request information.

Thus, unlike a conventional SN change process, the S-SN does not stop the DL/UL transmission/reception with the UE before executing the SN change on the UE, and the S-SN can stop the DL/UL transmission/reception with the UE after executing the SN change on the UE. The DAPS SN change process can be performed by the S-SN.

The UE stops the UL/DL transmission/reception with the S-SN when succeeding in the RA procedure with the T-SN. The UE may stop the UL/DL transmission/reception with the S-SN when receiving a source release request from the T-SN. As the source release request, an S-SN release request may be provided. In that case, the T-SN transmits the S-SN release request to the UE. The UE stops the UL/DL transmission/reception with the S-SN when receiving the S-SN release request from the T-SN.

RRC signaling may be used for the transmission of the S-SN release request from the T-SN to the UE. RRC signaling on SRB3 may be used. A new message for transmitting the S-SN release request may be provided. Alternatively, an existing message may be used. For example, an RRC reconfiguration message may be used. Information indicating the S-SN release request may be provided. For example, the above may be SN-daps-SourceRelease. For example, the T-SN includes the SN-daps-SourceRelease in the RRC reconfiguration message as the S-SN release request and performs transmission thereof on SRB3.

Alternatively, conventional daps-SourceRelease may be used as the information indicating the S-SN release request. For example, the T-SN includes the daps-SourceRelease in the RRC reconfiguration message as the S-SN release request and performs transmission thereof on SRB3. In a case where the information included in the RRC reconfiguration transmitted on SRB3 is the daps-SourceRelease, the UE preferably determines that it is the S-SN release request. Thus, a process different from conventional DAPS HO can be performed, and malfunction in the UE can be reduced.

Another method for transmitting the S-SN release request from the T-SN to the UE will be disclosed. The transmission of the S-SN release request from the T-SN to the UE may be performed in the RA procedure. The transmission may be performed in MSG2 or MSG4. Since the transmission can be performed in the RA procedure between the UE and the T-SN, the UE can recognize whether the release of the S-SN is requested upon succeeding in the RA procedure. The UE can be led to the recognition at an early stage. The S-SN release request from the T-SN to the UE may be transmitted by L1/L2 signaling or MAC signaling. Thus, the S-SN release request can be flexibly transmitted.

Thus, unlike a conventional SN change process, the UE does not stop the UL/DL transmission/reception with the S-SN before the RA procedure with the T-SN, and the UE can stop the UL/DL transmission/reception with the S-SN after succeeding in the RA procedure with the T-SN. The DAPS SN change process can be performed by the UE.

Information indicating success in SN change in DC (hereinafter, sometimes referred to as SN change success information) may be provided. The T-SN transmits information indicating success in SN change to the MN. When the T-SN succeeds in the RA procedure with the UE, the T-SN transmits the SN change success information to the MN. As another method, the T-SN may transmit the SN change success information to the MN when receiving RRC reconfiguration complete from the UE. Consequently, the MN can clearly recognize that the T-SN has connected to the UE. For example, the MN can perform a release process after the UE and the T-SN are reliably connected. The MN that has received the SN change success information from the T-SN preferably transmits the DL/UL transmission/reception stop request information to the S-SN. Thus, for example, the S-SN is prevented from stopping the DL/UL transmission/reception with the UE before the RA procedure between the UE and the T-SN succeeds. The S-SN is prevented from stopping the UL reception although the UE continues the UL transmission. It is possible to reduce unnecessary transmission/reception processes between the UE and the S-SN.

The SN change success information may not be provided. A message indicating success in SN change may not be provided. The T-SN may not transmit the SN change success information to the MN. In a case where the SN change success information is not transmitted, in the SN change process, the UE performs a T-SN configuration, and then the UE includes information indicating the completion of the T-SN configuration in RRC reconfiguration and performs transmission thereof to the MN. The MN that has received the information from the UE can recognize that the UE has completed the configuration of the T-SN. In a case where the MN receives T-SN configuration completion information from the UE, the MN may transmit a DL/UL transmission/reception stop request to the S-SN. Thus, the necessity of providing the SN change success information is eliminated. The amount of signaling can be reduced.

Another method will be disclosed in which the S-SN stops the DL/UL transmission/reception with the UE. Regarding the DL, in a case where the MN receives the information indicating the completion of the T-SN configuration from the UE, the MN transmits DL transmission stop information to the S-SN. In a case of receiving the DL transmission stop information, the S-SN stops DL transmission to the UE. Regarding the UL, in a case where the MN receives the SN change success information from the T-SN, the MN transmits UL reception stop information to the S-SN. In a case of receiving the UL reception stop information, the S-SN stops UL reception from the UE. The MN may transmit these pieces of information to the S-SN by using the same Xn message. For example, these pieces of information may be included in an SN release request and transmitted. By enabling stop of DL transmission and that of UL reception to be individually configured, the MN can timely configure, for the S-SN, each of the stop of DL transmission and that of the UL reception with the UE. In addition, in transmission and reception between the S-SN and the UE, the transmission can be stopped first for both of DL and UL. Consequently, it is possible to reduce unnecessary operations in the transmission/reception processes.

The MN transmits, to the S-SN, information requesting the start of data forwarding. The MN may transmit, to the S-SN, information requesting the start of data forwarding to be performed before the UE connects to the T-SN. The MN may transmit, to the S-SN, information requesting the transmission of EARLY STATUS TRANSFER. Inter-base station signaling is preferably used for the transmission of the information. For example, Xn signaling may be used. A new message may be provided for the transmission of the information. For example, the new message may be a DAPS SN change request message. It is possible to reduce malfunction with respect to a process by another message. Alternatively, an existing message may be used for the transmission of the information. For example, an existing SN release request message may be used for the transmission of the information. By using such an existing message, it is possible to reduce complication of processes.

Information indicating that the DL/UL transmission/reception with the UE is not stopped may be provided. The information may be information indicating that the DL/UL transmission/reception with the UE is continued. The information may be information indicating whether the DL/UL transmission/reception with the UE is stopped or continued. For example, the information may be used for the DL/UL transmission/reception with UE stop request information disclosed above. The information is preferably set to stop. The MN preferably includes the information, together with the information requesting the start of data forwarding, in a message for transmitting the information requesting the start of data forwarding, and performs transmission thereof to the S-SN. For example, the information is preferably included in an SN release request message. For example, by setting the information to continue, the S-SN that has received the SN release request message from the MN can determine to continue the DL/UL transmission/reception with the UE.

Information indicating that retention of UE context information is requested may be provided. Hereinafter, the information is sometimes referred to as UE context retention request information. As the information, UE Context Kept Indicator which is existing information may be used. The UE context retention request information may be included in the DL/UL transmission/reception with UE stop request information, or may be included in the same message together with the DL/UL transmission/reception with UE stop request information and transmitted. Thus, it is possible to stop the DL/UL transmission/reception with the UE while retaining the UE context.

In order to perform data forwarding to be performed before the UE connects to the T-SN, the S-SN transmits EARLY STATUS TRANSFER to the MN. The MN that has received EARLY STATUS TRANSFER from the S-SN transmits EARLY STATUS TRANSFER to the T-SN. The MN may transmit EARLY STATUS TRANSFER received from the S-SN to the T-SN without performing decoding.

The EARLY STATUS TRANSFER may be for SN. The EARLY STATUS TRANSFER may be for DAPS SN change. Information indicating that the EARLY STATUS TRANSFER is for SN or for DAPS SN change may be provided. The EARLY STATUS TRANSFER may include information indicating that the EARLY STATUS TRANSFER is for SN or for DAPS SN change. A conventional EARLY STATUS TRANSFER message can be used for SN or for DAPS SN change. As another method, another message may be provided as an EARLY STATUS TRANSFER message for SN or for DAPS SN change. It is possible to reduce malfunction.

Three examples of information to be included in the EARLY STATUS TRANSFER will be disclosed below.
(1) Sequence number (SN) of a first PDCP SDU to be transferred (forwarded) from the S-SN to the T-SN.
(2) Hyper frame number (HFN) of the first PDCP SDU to be transferred (forwarded) from the S-SN to the T-SN.
(3) A combination of (1) and (2).

These pieces of information may be included in DL COUNT information and further included in the EARLY STATUS TRANSFER. The EARLY STATUS TRANSFER may not include UL SN STATUS.

After transmitting the EARLY STATUS TRANSFER, the S-SN starts data forwarding. The S-SN continuously allocates a PDCP SN to DL data received from the UPF and performs forwarding thereof to the MN. The MN forwards the DL data forwarded from the S-SN to the T-SN. The T-SN buffers the DL data forwarded from the S-SN. The T-SN may transmit the DL data forwarded from the S-SN to the UE after connecting to the UE by the SN change process.

The UE stops the UL/DL transmission/reception with the S-SN when succeeding in the RA procedure with the T-SN in the SN change process. The UE may stop the UL/DL transmission/reception with the S-SN in a case of receiving the S-SN release request from the T-SN after the RA procedure with the T-SN by the SN change process.

The S-SN that has received the S-SN release request transmits SN STATUS TRANSFER to the T-SN in order to perform data forwarding. The S-SN transmits SN STATUS TRANSFER to the MN, and the MN that has received the SN STATUS TRANSFER transmits SN STATUS TRANSFER to the T-SN.

After transmitting SN STATUS TRANSFER, the S-SN starts data forwarding to the T-SN. The S-SN forwards the DL data received from the UPF to the T-SN. The S-SN that has received the DL data from the UPF performs forwarding to the MN, and the MN that has received the DL data forwarded from the S-SN performs forwarding to the T-SN.

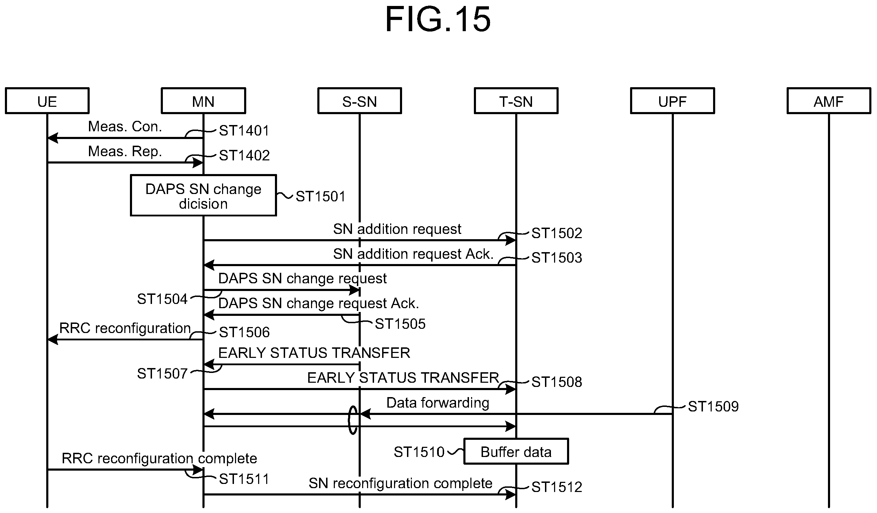

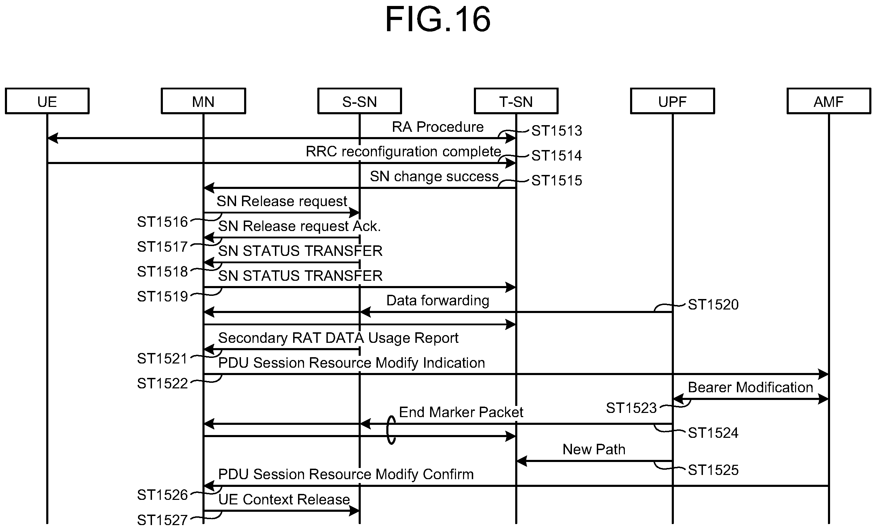

FIGS. 15 and 16 are each a diagram of a sequence illustrating an example of a method for executing DAPS SN change in the second embodiment. FIG. 15 illustrates a first half of the sequence, and FIG. 16 illustrates a second half of the sequence. In FIGS. 15 and 16, steps common to those in FIG. 14 are given the same step numbers as those therein, and a common description will be omitted.

In step ST1501, the MN determines to execute SN change for performing DAPS configuration (DAPS SN change) on the UE. The MN determines a T-SN to be an SN after change. The MN may determine a target PSCell to be a PSCell after change (hereinafter, sometimes referred to as a T-PSCell). An SN constituting the T-PSCell may be determined as the T-SN. The MS determines to perform the DAPS configuration for the T-SN. The MN may use the measurement result received from the UE in step ST1402 in the determination.

In step ST1502, the MN transmits a DAPS SN change request to the T-SN. Xn signaling may be used for the transmission of the request. A new message may be provided. Alternatively, an existing message may be used. For example, an SN addition request message may be used. Here (in the example illustrated in FIG. 15), a case will be disclosed where the SN addition request message is used. As the DAPS SN change request, both an SN change request and the DAPS configuration are preferably included in the SN addition request message. Consequently, the T-SN can recognize that it is a DAPS SN change request.

The T-SN that has received the DAPS SN change request from the MN determines whether the DAPS SN configuration can be accepted. The T-SN that has determined that the DAPS SN configuration can be accepted transmits, to the MN, an acknowledgement to the DAP SN change request in step ST1503. Xn signaling may be used for the transmission of the acknowledgements. A new message may be provided. Alternatively, an existing message may be used. For example, as in the example illustrated in FIG. 15, an SN addition request Acknowledge message may be used. DAPS configuration acceptance information and/or SN change acceptance information is preferably included in the message. Consequently, the MN that has received the acknowledgement from the T-SN can recognize which configuration the T-SN can accept. As another method, in a case of the acknowledgement, both the DAPS configuration acceptance information and the SN change acceptance information may be included, and in a case of the reject response, either one of the pieces of the information may be included, neither of the pieces of the information may be included, or reject information on both thereof may be included. Consequently, the MN that has received the acknowledgement from the T-SN can recognize whether the T-SN can accept the DAPS SN change.

The MN that has received the acknowledgement to the DAPS SN change request from the T-SN in step ST1503 transmits a DAPS SN change request to the S-SN in step ST1504. Consequently, the S-SN can recognize that the DAPS SN change has been triggered.

The S-SN that has received the DAPS SN change request determines to accept the DAPS SN change, and transmits an acknowledgement to the request (DAPS SN change request Acknowledge) to the MN in step ST1505. In a case where the S-SN does not determine to accept the DAPS SN change, a reject response to the request may be transmitted to the MN. The reject response may include cause information. Consequently, the MN can determine whether the S-SN has accepted the DAPS SN change request. As another method, in a case of accepting the DAPS SN change, the S-SN that has received the DAPS SN change request may perform the DAPS SN change. Transmission of a response message to the request from the S-SN to the MN can be omitted in the case of accepting the DAPS SN change.

In a case of receiving the DAPS SN change request in step ST1504 or a case of transmitting an acknowledgement to the request to the MN in step ST1505, the S-SN does not stop the DL/UL transmission/reception with the UE. That is, the S-SN continues the DL/UL transmission/reception with the UE. The S-SN continuously allocates the SN and/or the HFN to the DL data received from the UPF. That is, the S-SN continues to add the SN and/or the HFN to the DL data from the UPF and perform transmission to the UE. Thus, the S-SN can continue the DL/UL transmission/reception with the UE during the execution of the DAPS SN change.

In step ST1506, the MN transmits a DAPS SN change instruction to the UE. The instruction preferably includes information indicating that the T-SN is configured as an SN in DC and that the DAPS SN change is performed for the T-SN. As information for configuring the T-SN as the SN in DC, an identifier and an RRC configuration of the T-SN are preferably included in the instruction. The instruction may include the information about the DC configuration or the information about the DAPS configuration. As illustrated in FIG. 15, an RRC reconfiguration message may be used for the instruction. Consequently, the UE can recognize an SN change instruction to the T-SN. The UE that has completed the configuration for the DAPS SN change to the T-SN transmits completion of the DAPS SN change configuration to the MN in step ST1511. RRC signaling may be used for the transmission of the completion of the DAPS SN change configuration. For example, as illustrated in FIG. 15, RRC reconfiguration complete may be used.

The UE does not stop the UL/DL transmission/reception with the S-SN when receiving the DAPS SN change instruction in step ST1506. That is, the UE continues the UL/DL transmission/reception with the S-SN.

The S-SN that has received the DAPS SN change request from the MN in step ST1504 transmits EARLY STATUS TRANSFER to the T-SN in steps ST1507 and ST1508. The S-SN preferably transmits EARLY STATUS TRANSFER to the T-SN via the MN. The EARLY STATUS TRANSFER is preferably transmitted before the UE connects to the T-SN. The S-SN may transmit EARLY STATUS TRANSFER to the T-SN not after receiving the DAPS SN change request in step ST1504, but after transmitting the acknowledgement to the DAPS SN change request in step ST1505. The S-SN may transmit EARLY STATUS TRANSFER in a case of transmitting the acknowledgement.

EARLY STATUS TRANSFER preferably includes the SN and/or the HFN of the first PDCP SDU to be transferred from the S-SN to the T-SN. EARLY STATUS TRANSFER to be transmitted from the S-SN to the T-SN may not include UL SN STATUS. DL and UL are preferably separated in EARLY STATUS TRANSFER to be transmitted to the T-SN as described above. Regarding the DL, it is possible to determine the SN and/or the HFN for which transfer to the T-SN is started at an early stage, and to perform notification to the T-SN by using EARLY STATUS TRANSFER. Regarding the UL, since SN STATUS does not need to be included in EARLY STATUS TRANSFER to be transmitted to the T-SN, it is not necessary to determine the SN of UL data, and continuous transmission from the UE to the S-SN can be performed.

The S-SN that has transmitted EARLY STATUS TRANSFER to the T-SN transfers the DL data from the UPF to the T-SN in step ST1509. The S-SN adds the PDCP SN and the HFN to the DL data received from the UPF and performs transmission thereof to the T-SN. The T-SN buffers the transferred DL data received from the S-SN.

Thus, the S-SN can perform data forwarding to the T-SN before the UE connects to the T-SN. The T-SN can transmit the DL data to the UE at an early stage after connecting to the UE by the DAPS SN change process.

The MN that has received the completion of the DAPS SN change configuration transmitted from the UE in step ST1511 transmits the completion of the DAPS SN change configuration by the UE to the T-SN in step ST1512. Xn signaling may be used for the transmission of the completion of the DAPS SN change configuration by the UE. For example, as illustrated in FIG. 15, an SN reconfiguration complete message may be used. The T-SN can recognize that the UE has completed the DAPS SN change configuration.

The UE that has performed the DAPS SN change configuration to the T-SN performs the RA procedure with the T-SN in step ST1513. After succeeding in the RA procedure, the UE transmits an RRC reconfiguration complete message to the T-SN in step ST1514.

The UE may stop the UL/DL transmission/reception with the S-SN when succeeding in the RA procedure with the T-SN. As another method, the T-SN may transmit an S-SN release request to the UE to cause the UE to stop the UL/DL transmission/reception with the S-SN. For example, the request may be transmitted by being included in MSG4 to be transmitted in the RA procedure in step ST1513. Alternatively, the request may be transmitted after the success in the RA procedure in step ST1513. Alternatively, the request may be transmitted after the reception of the RRC reconfiguration complete in step ST1514. In a case of receiving the S-SN release request, the UE stops the UL/DL transmission/reception with the S-SN. Thus, the UE can stop the UL/DL transmission/reception with the S-SN continued after the reception of the DAPS SN change instruction in step ST1506.

After succeeding in the RA procedure in step ST1513 or after receiving the RRC reconfiguration complete in step ST1514, the T-SN transmits an SN change success message to the MN in step ST1515. Consequently, the MN can recognize that the RA procedure has succeeded between the UE and the T-SN or that the UE and the T-SN have been connected. The MN that has recognized that the UE and the T-SN have been connected may transmit DL/UL stop request information to the S-SN. Alternatively, an SN release request message may be transmitted. In the example illustrated in FIG. 16, the MN transmits an SN release request message (SN Release request) to the S-SN in step ST1516. The S-SN that has received the DL/UL stop request information or the SN release request message from the MN preferably stops the DL/UL transmission/reception with the UE as an SN release process. Alternatively, the DL/UL stop request information may be included in the SN release request message and transmitted. The stop of the DL/UL transmission/reception with the UE and the SN release process can be executed. The S-SN that has received the information or the message stops the DL/UL transmission/reception with the UE. Thus, the S-SN can stop the DL/UL transmission/reception with the UE continued also after the reception of the DAPS SN change request in step ST1504.

The S-SN that has stopped the DL/UL transmission/reception with the UE or has performed the SN release process transmits an SN Release request Acknowledge to the MN in step ST1517. The S-SN that has not stopped the DL/UL transmission/reception with the UE or has not performed the SN release process may transmit an SN release request reject response to the MN. The reject response preferably includes cause information.

The S-SN that has recognized that the UE and the T-SN have been connected performs data forwarding to the T-SN after the UE connects to the T-SN. The S-SN preferably performs data forwarding to the T-SN via the MN. In step ST1518, the S-SN transmits SN STATUS TRANSFER to the MN, and in step ST1519, the MN transmits SN STATUS TRANSFER received from the S-SN to the T-SN. The S-SN transfers the DL data from the UPF to the T-SN in step ST1520. The transfer is preferably performed via the MN. Thus, it is possible to transfer the DL data after DL transmission from the S-SN to the UE is stopped and before the UPF performs a path switch to the T-SN.

In step ST1521, the S-SN may transmit a data usage report (secondary RAT DATA Usage Report) to the MN. The amount of data performed via the S-SN is preferably included in the report. In steps ST1522 to ST1526, a path switch from the S-SN to the T-SN is performed among the MN, the AMF, the UPF, the S-SN, and the T-SN. After the path switch is completed, the MN transmits UE Context Release to the S-SN in step ST1527. The S-SN that has received the UE Context Release performs release of UE context.

Thus, the DAPS SN change can be executed on the UE.

With the disclosure of the second embodiment, the DAPS configuration can be performed when the SN change process is performed. The DAPS SN change process can be performed. Therefore, it is possible to reduce communication interruption time at the time of the SN change process. It is possible to maintain a high communication capacity in the SN change process in a case where DC is configured.

The method disclosed in the second embodiment may be appropriately applied to a PSCell change process. The method may be appropriately applied to an inter-SN PSCell change process. A PSCell before change is preferably a PSCell of the S-SN, and a PSCell after change is preferably a PSCell of the T-SN. The DAPS configuration can be performed when the inter-SN PSCell change process is performed. The method disclosed in the second embodiment may be appropriately applied to an intra-SN PSCell change process. The PSCell change process is performed from a PSCell before change to a PSCell after change in the same SN. In that case, for example, part or all of signaling of the DAPS SN change request or the response, signaling of the DL/UL transmission/reception with UE stop request information or the response, data forwarding to be performed before the UE between the S-SN and the T-SN connects to the T-SN and signaling related to the data forwarding, and data forwarding to be performed after the UE connects to the T-SN and signaling related to the data forwarding may be omitted. The DAPS configuration can be performed when the intra-SN PSCell change process is performed.

In the second embodiment, the MN triggers the DAPS SN change process, but the SN may trigger the DAPS SN change process. The S-SN may trigger the DAPS SN change process. The S-SN determines to make a request to the MN for the DAPS SN change. The S-SN makes a request to the MN for the DAPS SN change. The MN that has received the DAPS SN change request from the S-SN preferably performs the DAPS SN change by appropriately applying the DAPS SN change process disclosed in the second embodiment. As another method, the S-SN may determine to make a request to the MN for the SN change. The S-SN makes a request to the MN for the SN change. The MN that has received the SN change request from the S-SN may determine the DAPS SN change. The MN that has determined the DAPS SN change preferably performs the DAPS SN change by appropriately applying the DAPS SN change process disclosed in the second embodiment. Thus, the SN can trigger the DAPS SN change process or the SN change process.

In a case where the S-SN triggers the DAPS SN change process, the MN preferably transmits a DAPS SN change request response to the S-SN instead of the DAPS SN change request disclosed in the second embodiment. In a case where the MN that has received the DAPS SN change request performs the DAPS SN change process, the MN transmits, to the S-SN, an acknowledgement to the DAPS SN change request. In a case where the DAPS SN change process is not performed, a reject response may be transmitted. The reject response may include cause information. The S-SN that has received the acknowledgement to the DAPS SN change request from the MN preferably performs the DAPS SN change process disclosed in the second embodiment.

The transmission of the DAPS SN change request from the S-SN to the MN and the transmission of the DAPS SN change request response from the MN to the S-SN are preferably performed by using inter-base station signaling. For example, Xn signaling is preferably used. A new message may be provided for the transmission. Alternatively, an existing message may be used. By using such an existing message, it is possible to avoid complication of processes. For example, an SgNB Change Required message may be used as the existing message. The message preferably includes information indicating the DAPS SN change request. In addition, for example, an SgNB Change Confirm message may be used for the transmission of the DAPS SN change request response. The message preferably includes information indicating the DAPS SN change request response. Thus, the S-SN can trigger the DAPS SN change process.

The UE may transmit a report of a measurement result to the S-SN. The S-SN may determine to trigger the SN change process or the DAPS SN change process by using the report of the measurement result received from the UE. Thus, the SN can trigger the DAPS SN change process depending on communication quality between the SN and the UE.

### Third Embodiment.

In the second embodiment, the method for reducing communication interruption time at the time of the SN change process has been disclosed. As a DC enhancement technology, further improvement of the robustness and reliability of communication at the time of SN change process is required.

The third embodiment discloses a method for solving such a problem.

In order to solve the above problem, in the communication system according to the third embodiment, the DAPS SN change process is executed at the time of an SN change process in which a conditional PSCell change (CPC) configuration is performed (hereinafter, sometimes referred to as inter-SN CPC). The execution of the DAPS SN change process may be permitted during the inter-SN CPC. The DAPS SN change process may be triggered during the inter-SN CPC. The DAPS SN change process may be executed during a condition evaluation of the inter-SN CPC. In an inter-SN CPC process, the triggering of the DAPS SN change process may be permitted before an evaluation condition of any one of SNs to be candidates for an SN after change is met in the UE.

The triggering of the inter-SN CPC is preferably determined by the MN. The MN may determine the triggering of the inter-SN CPC for the UE by using the measurement report received from the UE. The triggering of the DAPS SN change process during the condition evaluation of the inter-SN CPC is preferably determined by the MN. The triggering of the DAPS SN change process for the UE may be determined by using the measurement report received from the UE. The UE may perform a measurement and a measurement report to the MN during the execution of the inter-SN CPC and while being connected to the MN. Thus, the MN can timely determine the triggering of the DAPS SN change process for the UE.

The MN may determine triggering of the CPC, triggering of the inter-SN CPC, or triggering of the DAPS SN change process for the UE by using CSI received from the UE. It is possible to promptly follow deterioration of a communication environment and to improve the reliability of communication.

In a case where the DAPS SN change process is triggered during the condition evaluation of the inter-SN CPC, the inter-SN CPC is preferentially processed. In other words, the DAPS SN change process triggered during the condition evaluation of the inter-SN CPC may be stopped during the execution of the inter-SN CPC. Consequently, processes of the inter-SN CPC and the DAPS SN change are clarified, and thus malfunction can be reduced.

However, in the case of this method, even though the DAPS SN change process has been triggered, it is necessary to wait for the process of the DAPS SN change. Although SN change is required, a delay may occur, and thus communication quality may deteriorate. A method for solving such a problem will be disclosed.

In the case where the DAPS SN change process is triggered during the condition evaluation of the inter-SN CPC, the DAPS SN change process is preferentially processed. In other words, during the execution of the DAPS SN change process triggered during the condition evaluation of the inter-SN CPC, the inter-SN CPC is not executed. The inter-SN CPC may be stopped. By stopping the inter-SN CPC, a process such as a condition evaluation by the UE can be stopped. Therefore, power consumption of the UE can be reduced. In addition, since the necessity of simultaneous execution of the DAPS SN change process and the inter-SN CPC is eliminated, complication of processes among the UE, the MN, and the SNs can be prevented. It is possible to reduce malfunction in the UE, the MN, and the SNs.

A T-SN to be a candidate in the inter-SN CPC may be different from a T-SN for the DAPS SN change. The MN can timely trigger the DAPS SN change process for an SN better for the UE. The T-SN for the DAPS SN change may be included in T-SNs to be candidates in the inter-SN CPC. Part or all of an RRC configuration of the T-SN in the DAPS SN change process may be omitted. It is possible to reduce signaling or information for the RRC configuration of the T-SN for the DAPS SN change between the MN and the T-SN and between the MN and the UE.

In a case where the inter-SN CPC is stopped, the inter-SN CPC may be canceled. The MN notifies the T-SN to be a candidate of a message indicating cancel of the inter-SN CPC.

Information for specifying the inter-SN CPC may be provided. The information may be an identifier. In a case where the MN determines the inter-SN CPC, the information for specifying the inter-SN CPC may be included in an inter-SN CPC request message to be transmitted to the T-SN to be a candidate. As the inter-SN CPC request message, an SN addition request message may be used. The information for specifying the inter-SN CPC may be included in an inter-SN CPC cancel message to be transmitted from the MN to the T-SN to be a candidate. By making the information for specifying the inter-SN CPC to be included in the inter-SN CPC cancel message the same as the information for specifying the inter-SN CPC included in the inter-SN CPC request message, the T-SN can recognize which inter-SN CPC has been canceled.

The information for specifying the inter-SN CPC may be configured by the MN. The information may be a number not overlapping in the MN.

In a case where the MN determines to perform the inter-SN CPC, information for specifying the MN may be included in the inter-SN CPC request message to be transmitted to the T-SN to be a candidate. The information may be an identifier. The information for specifying the MN may be included in the inter-SN CPC cancel message to be transmitted from the MN to the T-SN to be a candidate. The information for specifying the MN may be used in order for the T-SN to recognize which inter-SN CPC has been canceled. The information for specifying the inter-SN CPC may be used in combination. Thus, the T-SN can recognize which inter-SN CPC configured by which MN has been canceled.

Another method for solving the above problem will be disclosed. A plurality of T-SNs as candidates are enabled to be configured in the DAPS SN change process disclosed in the second embodiment. In the SN change process, a plurality of T-SNs as candidates are configured, and the DAPS is configured for candidate T-SNs. Hereinafter, a process in which a plurality of T-SNs as candidates are configured, and the DAPS is configured for candidate T-SNs in the SN change process is sometimes referred to as DAPS inter-SN CPC. The MN preferably determines triggering of the DAPS inter-SN CPC. The triggering of the DAPS inter-SN CPC for the UE may be determined by using the measurement report received from the UE. The S-gNB may determine the triggering of the DAPS inter-SN CPC for the UE by using the CSI received from the UE. It is possible to promptly follow deterioration of a communication environment and to improve the reliability of communication. The MN determines a candidate T-SN to be an SN after change in the SN change process. The MN configures the DAPS inter-SN CPC for all T-SNs to be candidates. The MN transmits the configuration of the DAPS inter-SN CPC to all T-SNs to be candidates. As the configuration of the DAPS inter-SN CPC, the configuration of the inter-SN CPC and the configuration of the DAPS SN change may be included.

Inter-base station signaling is preferably used for the transmission of the DAPS inter-SN CPC configuration. For example, Xn signaling may be used. A new message may be provided for the transmission of the DAPS inter-SN CPC configuration. It is possible to reduce malfunction with respect to a process by another message. Alternatively, an existing message may be used for the transmission of the DAPS inter-SN CPC configuration. For example, an SN addition request message may be used. By using such an existing message, it is possible to reduce complication of processes.

A candidate T-SN for which the DAPS inter-SN CPC has been configured transmits an acknowledgement to the MN. A candidate T-SN for which the DAPS inter-SN CPC is not configured transmits a reject response to the MN. The reject response may include cause information.

Inter-base station signaling is preferably used for transmission of a DAPS inter-SN CPC configuration response. For example, Xn signaling may be used. A new message may be provided for the transmission of the DAPS inter-SN CPC configuration response. It is possible to reduce malfunction with respect to a process by another message. Alternatively, an existing message may be used for the transmission of the DAPS inter-SN CPC configuration response. For example, an SN addition request Acknowledge message may be used for the acknowledgement, and an SN addition request reject message may be used for the reject response. By using such an existing message, it is possible to reduce complication of processes.

The S-SN performs data forwarding to all candidate T-SNs before the UE connects to the T-SN. The MN transmits, to the S-SN, information requesting the start of data forwarding before the UE connects to the T-SN. Regarding the information, it is preferable to appropriately apply the information used in the method disclosed in the second embodiment.

The S-SN that has received the information requesting the start of data forwarding before the UE connects to the T-SN from the MN transmits EARLY STATUS TRANSFER to each of the candidate T-SNs. The S-SN preferably transmits EARLY STATUS TRANSFER to each of the candidate T-SNs via the MN. As another method, the S-SN that has received the information requesting the start of data forwarding before the UE connects to the T-SN from the MN transmits EARLY STATUS TRANSFER to the MN. The MN that has received EARLY STATUS TRANSFER from the S-SN may transmit EARLY STATUS TRANSFER to each of the candidate T-SNs. Regarding the transmission of EARLY STATUS TRANSFER, it is preferable to appropriately apply the method disclosed in the second embodiment.

EARLY STATUS TRANSFER to be transmitted to each of the candidate T-SNs may not include UPLINK SN STATUS.

After transmitting EARLY STATUS TRANSFER to the MN or each of the candidate T-SNs, the S-SN starts data forwarding to each of the candidate T-SNs. The S-SN continuously allocates an SN to DL data received from the UPF and performs forwarding thereof to the MN. The MN forwards the DL data forwarded from the S-SN to each of the candidate T-SNs.

The MN may duplicate the DL data to be forwarded from the S-SN to each of the candidate T-SNs. The MN may duplicate the SN allocated by the S-SN. It is preferable to make duplicates as many as the number of candidate T-SNs. The MN forwards the DL data and the SN thus duplicated to each of the candidate T-SNs.

The S-SN may duplicate the DL data from the UPF. The S-SN allocates the same SN to each piece of the duplicated DL data. It is preferable to make duplicates as many as the number of candidate T-SNs. The S-SN forwards the DL data thus duplicated and the SN to each of the candidate T-SNs via the MN.

The S-SN continues the DL/UL transmission/reception with the UE also after receiving data forwarding start request information from the MN or after transmitting EARLY STATUS TRANSFER to the MN or each of the candidate T-SNs. In other words, the S-SN does not stop the DL/UL transmission/reception with the UE after receiving the data forwarding start request information from the MN or when transmitting EARLY STATUS TRANSFER to each of the candidate T-SNs. The S-SN continues the DL/UL transmission/reception with the UE until receiving an SN release request from the MN. The S-SN stops the DL/UL transmission/reception with the UE when receiving the SN release request from the MN.

Each of the candidate T-SNs buffers the DL data forwarded from the S-SN. A candidate T-SN employed as an SN after change by a condition evaluation of CPC transmits the DL data to the UE after connecting to the UE. When receiving an instruction to cancel the DAPS inter-SN CPC configuration from the MN, for example, when receiving the SN addition cancel message, a candidate T-SN not employed as the SN after change by the condition evaluation of the CPC discards the buffered data. Thus, it is possible to avoid a situation in which the data buffered by the candidate T-SN not employed as the SN after change remains without being discarded in a DAPS inter-SN CPC process.

The MN that has determined to trigger the DAPS inter-SN CPC transmits a DAPS inter-SN CPC instruction to the UE. After receiving the DAPS inter-SN CPC instruction from the MN, the UE continues the UL/DL transmission/reception with the S-SN. In other words, the UE does not stop the UL/DL transmission/reception with the S-SN when receiving the DAPS inter-SN CPC instruction from the MN. The UE employs, as the SN after change, a T-SN that meets a condition by the condition evaluation of the CPC. The UE performs the RA procedure with the T-SN employed as the SN after change. The UE stops the UL/DL transmission/reception with the S-SN when succeeding in the RA procedure with the T-SN employed as the SN after change. Alternatively, the UE stops the UL/DL transmission/reception with the S-SN in a case of receiving the S-SN release request from the T-SN after the RA procedure with the T-SN employed as the SN after change. Regarding a method for transmitting the S-SN release request, it is preferable to appropriately apply the method disclosed in the second embodiment.

The S-SN that has received the S-SN release request from the MN performs data forwarding to the T-SN employed as the SN after change by the condition evaluation of the CPC. The data forwarding is preferably performed on DL data. The S-SN transmits SN STATUS TRANSFER to the T-SN employed as the SN after change via the MN in order to perform the data forwarding.

After transmitting SN STATUS TRANSFER, the S-SN starts data forwarding to the T-SN employed as the SN after change via the MN. The S-SN forwards DL data received from the UPF to the T-SN employed as the SN after change via the MN.

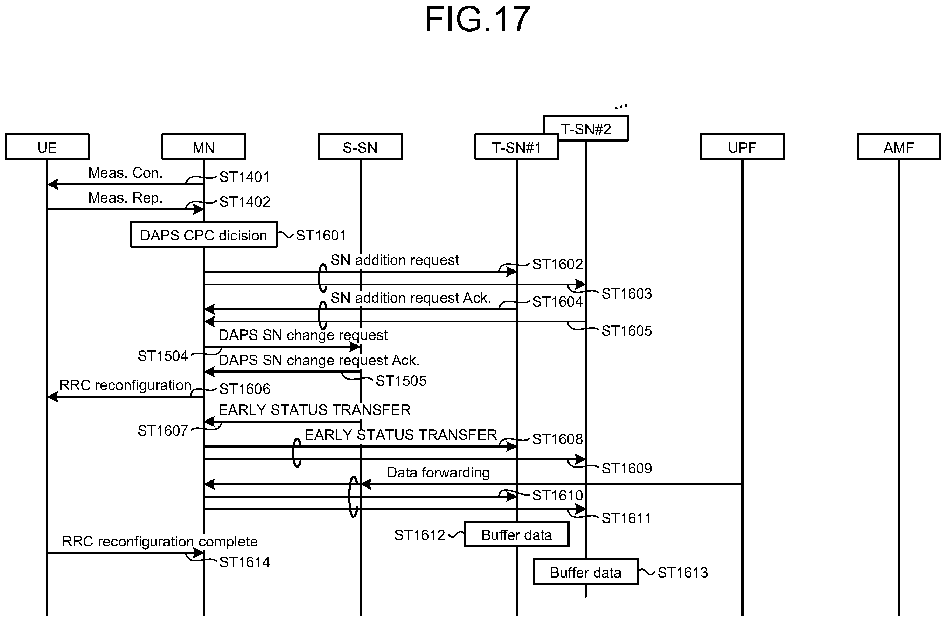

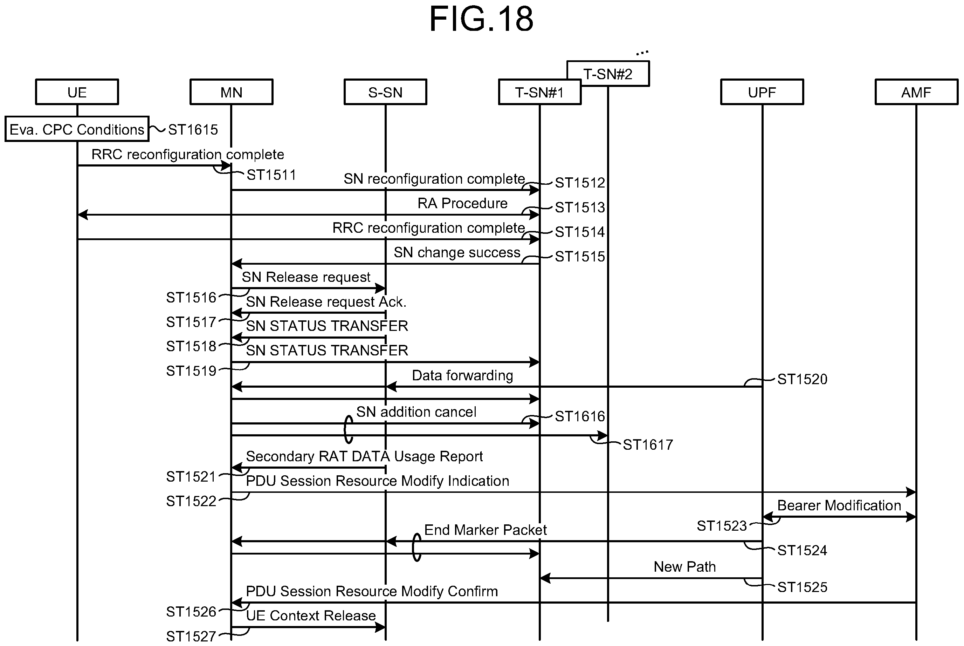

FIGS. 17 and 18 are each a diagram of a sequence illustrating an example of a method for executing DAPS inter-SN CPC in the third embodiment. FIG. 17 illustrates a first half of the sequence, and FIG. 18 illustrates a second half of the sequence. In FIGS. 17 and 18, steps common to those in FIGS. 15 and 16 are given the same step numbers as those therein, and a common description will be omitted.

In step ST1601, the MN determines to execute the DAPS inter-SN CPC on the UE. The MN determines one or a plurality of T-SNs to be candidates for an SN after change in the inter-SN CPC. The MN may determine one or a plurality of T-PSCells to be candidates for a PSCell after change (hereinafter, sometimes referred to as T-PSCells). An SN constituting the T-PSCell may be determined as the T-SN. The MN determines to perform the DAPS configuration for each T-SN to be a candidate. The MN may use the measurement result received from the UE in step ST1402 in the determination.

The MN transmits a DAPS inter-SN CPC request to T-SN #1 and T-SN #2 to be candidates for an SN after change in steps ST1602 and ST1603, respectively. Xn signaling may be used for the transmission of the request. A new message may be provided. Alternatively, an existing message may be used. For example, an SN addition request message may be used. Here (in the example illustrated in FIG. 17), a case will be disclosed where the SN addition request message is used. As the DAPS inter-SN CPC request, both a CPC request and a DAPS SN change request are preferably included in the SN addition request message. Consequently, candidate T-SN #1 and T-SN #2 can each recognize that it is a DAPS inter-SN CPC change request.

Candidate T-SN #1 and T-SN #2 that have received the DAPS inter-SN CPC request from the MN determine whether the DAPS inter-SN CPC configuration can be accepted. Candidate T-SN #1 and T-SN #2 that have determined that the DAPS inter-SN CPC configuration can be accepted respectively transmit, to the MN in steps ST1604 and ST1605, acknowledgements to the DAPS inter-SN CPC change requests. Xn signaling may be used for the transmission of the acknowledgements. A new message may be provided. Alternatively, an existing message may be used. For example, an SN addition request Acknowledge message may be used. DAPS SN change acceptance information and/or CPC acceptance information is preferably included in the message. Consequently, the MN that has received the acknowledgement from each of the candidate T-SNs can recognize which configuration each of the candidate T-SNs can accept. As another method, in a case of the acknowledgement, both the DAPS SN change acceptance information and the CPC acceptance information may be included, and in a case of the reject response, either one of the pieces of the information may be included, neither of the pieces of the information may be included, or reject information for both thereof may be included. Consequently, the MN that has received the acknowledgement from each of the candidate T-SNs can recognize whether each of the candidate T-SNs can accept the DAPS inter-SN CPC.

The MN that has received the acknowledgements to the DAPS inter-SN CPC requests from the candidate T-SNs in steps ST1604 and ST1605 transmits a DAPS SN change request to the S-SN in step ST1504. In a case of receiving the acknowledgements to the DAPS inter-SN CPC requests including the DAPS SN change acceptance information, the MN may transmit the DAPS SN change request to the S-SN in step ST1504. Consequently, the S-SN can recognize that the DAPS SN change has been triggered. Regarding information to be included in the DAPS SN change request, it is preferable to appropriately apply the examples of the information disclosed in the second embodiment. The information about the T-SN may be information about candidate T-SNs. The S-SN that has received the DAPS SN change request determines to accept the DAPS SN change, and transmits, to the MN, an acknowledgement to the request in step ST1505.

In the case of receiving the DAPS SN change request in step ST1504 or the case of transmitting the acknowledgement to the request to the MN in step ST1505, the S-SN does not stop the DL/UL transmission/reception with the UE. That is, the S-SN continues the DL/UL transmission/reception with the UE. The S-SN continuously allocates the SN and/or the HFN to the DL data received from the UPF. That is, the S-SN continues to add the SN and/or the HFN to the DL data from the UPF and perform transmission to the UE. Thus, the S-SN can continue the DL/UL transmission/reception with the UE during the execution of the DAPS SN change.

In step ST1606, the MN transmits a DAPS inter-SN CPC instruction to the UE. RRC signaling is preferably used for the transmission. For example, an RRC reconfiguration message may be used. The instruction preferably includes information indicating that it is inter-SN CPC by DAPS. The instruction may include the information about the DC configuration or the information about the DAPS configuration. In addition, the information about candidate T-SNs is preferably included. Examples of the information include an identifier, an RRC configuration, and an evaluation condition configuration of each of the candidate T-SNs. The RRC configuration may include information about a DAPS bearer that performs the DAPS inter-SN CPC.

The UE may not execute the RRC configuration of one or a plurality of T-SNs received from the MN until a T-SN as an SN after change is determined by the condition evaluation of the CPC, and in a case where the T-SN as an SN after change is determined, the UE may execute the RRC configuration of the T-SN. It is possible to avoid complication of processes performed by the UE. As another method, the UE may execute the RRC configuration of one or a plurality of candidate T-SNs received from the MN before the T-SN as an SN after change is determined by the condition evaluation of the CPC. The UE may release the RRC configuration of another candidate T-SN in a case where the T-SN as an SN after change is determined or a case of succeeding in the RA procedure with the T-SN as an SN after change. An HO process can be performed at an early stage in the case where the T-SN as an SN after change is determined.

The UE does not stop the UL/DL transmission/reception with the S-SN when receiving the DAPS inter-SN CPC instruction in step ST1606. That is, the UE continues the UL/DL transmission/reception with the S-SN.

The S-SN that has received the DAPS SN change request from the MN in step ST1504 transmits EARLY STATUS TRANSFER to the candidate T-SNs in steps ST1607, ST1608, and ST1609. It is preferable that the S-SN transmit EARLY STATUS TRANSFER to the MN and the MN transmit, to each of the candidate T-SNs, EARLY STATUS TRANSFER received from the S-SN. The EARLY STATUS TRANSFER is preferably transmitted before the UE connects to the T-SN by the DAPS inter-SN CPC. The S-SN may transmit EARLY STATUS TRANSFER to each of the candidate T-SNs as triggered not by the reception of the DAPS SN change request in step ST1504, but by the transmission of the response in step ST1505. That is, the S-SN may transmit EARLY STATUS TRANSFER in a case of transmitting the acknowledgement.

EARLY STATUS TRANSFER preferably includes the SN and/or the HFN of the first PDCP SDU to be transferred from the S-SN to each T-SN. The MN preferably includes the same SN and/or the same HFN in EARLY STATUS TRANSFER and performs transmission thereof to each of the candidate T-SNs. Data forwarding control is facilitated.

The S-SN may transmit EARLY STATUS TRANSFER to each of the candidate T-SNs via the MN. The MN transmits, to each of the T-SNs, EARLY STATUS TRANSFER directed to each of the candidate T-SNs received from the S-SN. Consequently, a processing load of the MN can be reduced. In addition, malfunction in the MN can be reduced. It is preferable that the S-SN transmit, to each of the candidate T-SNs, EARLY STATUS TRANSFER including the same SN and/or the same HFN. Data forwarding control is facilitated.

EARLY STATUS TRANSFER to be transmitted from the S-SN to each of the candidate T-SNs may not include UL SN STATUS. DL and UL are preferably separated in EARLY STATUS TRANSFER to be transmitted to each of the candidate T-SNs as described above. An effect similar to that of the method disclosed in the second embodiment is obtained.

The S-SN that has transmitted EARLY STATUS TRANSFER to each of the candidate T-SNs transfers the DL data from the UPF to the candidate T-SNs in steps ST1610 and ST1611. The S-SN adds the SN and the HFN to the DL data received from the UPF and performs transfer thereof to the MN. The MN duplicates the transfer data received from the S-SN and performs transfer thereof to each of the candidate T-SNs. Each of the candidate T-SNs buffers the transferred DL data received from the S-SN.

The S-SN may add the PDCP SN and the HFN to the DL data received from the UPF and perform transmission thereof to each of the candidate T-SNs. The transmission to each of the candidate T-SNs may be performed via the MN. The MN transfers, to each of the candidate T-SNs, the transfer data directed to each of the candidate T-SNs received from the S-SN. Consequently, a processing load of the MN can be reduced. In addition, malfunction in the MN can be reduced. The T-SN buffers the transferred DL data received from the S-SN.

Thus, the S-SN can perform data forwarding to each of the candidate T-SNs before the UE connects to the T-SN by the DAPS inter-SN CPC. After the T-SN connects to the UE by the DAPS inter-SN CPC, the T-SN can transmit data to the UE at an early stage.

In step ST1615, the UE performs a condition evaluation in the DAPS inter-SN CPC on each of the candidate T-SNs. In a case where any of the candidate T-SNs satisfies the evaluation condition, the UE transmits an RRC reconfiguration complete message to the MN in step ST1511. In this example (the example illustrated in FIG. 18), the T-SN satisfying the evaluation condition is T-SN #1. The UE configures T-SN #1 satisfying the evaluation condition, and transmits completion of the configuration of the T-SN #1 to the MN in step ST1511. The completion of the configuration of the T-SN #1 may be included in the RRC reconfiguration complete message and transmitted. Consequently, T-SN #1 satisfying the evaluation condition by the UE can recognize that the UE has completed the configuration of T-SN #1.

In step ST1513, the UE performs the RA procedure on T-SN #1 satisfying the evaluation condition. In step ST1514, the UE transmits an RRC reconfiguration complete message to T-SN #1. Regarding subsequent processes, it is preferable to appropriately apply the method disclosed in the second embodiment, for example, the method disclosed in FIGS. 15 and 16.

In a case of recognizing that the UE and T-SN #1 have been connected or a case of starting data forwarding to the UE after connecting to T-SN #1, the MN transmits cancel of the DAPS inter-SN CPC configuration to candidate T-SN #1 and T-SN #2 in steps ST1616 and ST1617, respectively. Xn signaling may be used for the transmission. A new message may be provided. For example, an SN addition cancel message may be provided. Alternatively, an existing message may be used. The message may include information indicating to which cell the DAPS inter-SN CPC has been performed. The candidate T-SNs that each have received the message release the DAPS inter-SN CPC configuration. Thus, usage efficiency of resources can be improved.

Another method for canceling the DAPS inter-SN CPC configuration will be disclosed. Candidate T-SNs in the DAPS inter-SN CPC may release the DAPS inter-SN CPC configuration after the elapse of a predetermined time from the reception of the DAPS inter-SN CPC requests in steps ST1602 and ST1603, after the elapse of a predetermined time from the performance of the DAPS inter-SN CPC configuration, or after the elapse of a predetermined time from the transmission of DAPS inter-SN CPC configuration request acknowledgements in steps ST1604 and ST1605. The predetermined time may be managed by a timer. In that case, the candidate T-SNs in the DAPS inter-SN CPC start the timer in a case where the DAPS inter-SN CPC requests are received in steps ST1602 and ST1603, a case where the DAPS inter-SN CPC configuration is performed, or a case where the DAPS inter-SN CPC configuration request acknowledgements are transmitted in steps ST1604 and ST1605. The candidate T-SNs in the DAPS inter-SN CPC release the DAPS inter-SN CPC configuration in a case where the timer expires. A candidate T-SN that has succeeded in the RA procedure with the UE or has received the RRC Reconfiguration Complete message from the UE before the timer expires executes a process as a T-SN as an SN after change for the UE. Thus, signaling for canceling the DAPS inter-SN CPC can be reduced.

The predetermined time or the timer may be configured by the MN. It is possible to perform a configuration suitable for the UE to be a target of the DAPS inter-SN CPC. As another method, the predetermined time or the timer may be configured by a node of the core network. For example, the configuration may be performed by an operation management node or a maintenance node. The predetermined time or timer is preferably transmitted from the node to the MN in advance. It is possible to execute a configuration suitable for each MN as a system. As another method, the configuration of the predetermined time or the timer may be statically determined in a standard or the like. Since the necessity of the configuration is eliminated, the amount of signaling can be reduced.

The cancel of the DAPS inter-SN CPC configuration may not be transmitted to T-SN #1 employed as an SN after change in the DAPS inter-SN CPC. The cancel of the DAPS inter-SN CPC configuration may be transmitted only to candidate T-SN #2 not employed as an SN after change in the DAPS inter-SN CPC. A candidate T-SN employed as an HO destination in the DAPS inter-SN CPC is only required to recognize that the T-SN itself has executed the HO with the UE when succeeding in the RA procedure with the UE, receiving the RRC reconfiguration complete, or receiving the transfer data from the S-SN. The necessity of the cancel of the DAPS inter-SN CPC configuration can be eliminated.

Thus, the DAPS inter-SN CPC can be executed on the UE.

In the third embodiment, it has been disclosed that the MN configures the DAPS inter-SN CPC for all T-SNs to be candidates in the DAPS inter-SN CPC. However, as another method, the MN may configure the DAPS inter-SN CPC for some T-SNs, or configure the DAPS inter-SN CPC for any one of the T-SNs. It is preferable to perform the configuration by appropriately applying the method disclosed above. In addition, the number of T-SNs for which the DAPS inter-SN CPC is configured may be configurable. For example, the MN may perform the configuration. In addition, a node of the core network may perform the configuration, or a node provided for management or maintenance of the communication system may perform the configuration. The node preferably transmits information about the configuration to the MN. The MN preferably executes the DAPS inter-SN CPC by using the method disclosed above. Thus, the number of T-SNs for which the DAPS inter-SN CPC is configured can be flexibly changed. For example, even in a case where a dense NW is configured, flexible control can be performed depending on the disposition of the T-SN, the radio wave propagation environment, a communication load situation, and the like.

With the disclosure of the third embodiment, the DAPS SN change process can be executed during the inter-SN CPC. In addition, in the DAPS SN change process, a plurality of T-SNs as candidates can be configured. Therefore, communication interruption time at the time of the SN change process can be reduced, and even in a case where DC is configured, a high communication capacity can be maintained in the SN change process. In addition, it is possible to further improve the robustness and reliability of communication at the time of the SN change process in the case where DC is configured.

Inter-MN HO may be executed during the inter-SN CPC. The execution of the inter-MN HO may be permitted during the inter-SN CPC. The inter-MN HO may be triggered during the inter-SN CPC. In the inter-SN CPC process, the triggering of the inter-MN HO may be permitted before an evaluation condition of any one of SNs to be candidates for an SN after change is met in the UE.

In a case where the inter-MN HO is triggered during the condition evaluation of the inter-SN CPC, the inter-SN CPC is preferentially processed. In other words, the inter-MN HO triggered during the condition evaluation of the inter-SN CPC may be stopped during the execution of the inter-SN CPC. Consequently, processes of the inter-SN CPC and the DAPS SN change are clarified, and thus malfunction can be reduced.

However, in the case of this method, even though the inter-MN HO has been triggered, it is necessary to wait for a process of the inter-MN HO. Although the inter-MN HO is required, a delay may occur, and thus communication quality may deteriorate. A method for solving such a problem will be disclosed.

In the case where the inter-MN HO is triggered during the condition evaluation of the inter-SN CPC, the inter-MN HO is preferentially processed. In other words, during the execution of the inter-MN HO process triggered during the condition evaluation of the inter-SN CPC, the inter-SN CPC is not executed. The inter-SN CPC may be stopped. By stopping the inter-SN CPC, a process such as a condition evaluation by the UE can be stopped. Therefore, power consumption of the UE can be reduced. In addition, since the necessity of simultaneous execution of the inter-MN HO and the inter-SN CPC is eliminated, complication of processes among the UE, the MNs, and the SNs can be prevented. It is possible to reduce malfunction in the UE, the MN, and the SNs.

In a case where the inter-SN CPC is stopped, the inter-SN CPC may be canceled. An S-MN (MN as an HO source in the inter-MN HO) transmits a message indicating cancel of the inter-SN CPC to a T-SN to be a candidate. It is preferable to appropriately apply the method disclosed above.

Thus, the inter-MN HO can be executed even during the inter-SN CPC. Since the inter-MN HO in a DC configuration can be executed, it is possible to improve the robustness and reliability of communication at the time of configuring DC.

DC may be continued in the inter-MN HO during the inter-SN CPC. The SN may not be changed by executing the inter-MN HO during the inter-SN CPC. The inter-MN HO without SN change is preferably executed. The SN may be changed by executing the inter-MN HO during the inter-SN CPC. The inter-MN HO with SN change is preferably executed. Thus, DC can be configured for the UE also after the HO.

An inter-SN CPC configuration may be changed by executing the inter-MN HO during the inter-SN CPC. The inter-SN CPC configuration after executing the HO may be performed by a T-MN (MN as an HO destination in the inter-MN HO). The T-MN preferably configures a candidate T-SN in the inter-SN CPC. The T-MN may perform a process for requesting the inter-SN CPC configuration on the candidate T-SN. The T-MN may configure, as the candidate T-SN, a T-SN from which an inter-SN CPC configuration request acknowledgement has been received. The T-MN transmits the inter-SN CPC configuration to the UE as a target of the inter-MN HO during the inter-SN CPC. The transmission may be performed before the HO is performed. The T-MN includes the inter-SN CPC configuration in an HO request acknowledgement of the HO and performs transmission thereof to the S-MN. Inter-base station signaling may be used for the transmission. The S-MN includes the inter-SN CPC configuration configured by the T-MN in an HO instruction and performs transmission thereof to the UE. RRC signaling may be used for the transmission. Thus, the UE can execute the inter-SN CPC configuration configured by the T-MN after executing the inter-MN HO during the inter-SN CPC.

By enabling the configuration of the inter-SN CPC to be changed after executing the inter-MN HO during the inter-SN CPC, the inter-SN CPC configuration suitable for the HO destination can be performed, and the inter-SN CPC suitable for the HO destination can be executed. A high communication capacity can be maintained at the HO destination, and the robustness and reliability of communication can be improved.

Although the method for executing the inter-MN HO during the inter-SN CPC has been disclosed in the above, the inter-MN HO may be inter-MN HO during the DAPS inter-SN CPC. It is preferable to appropriately apply the above method. A similar effect can be obtained.

The method disclosed in the third embodiment may be appropriately applied to intra-SN CPC. A candidate T-SN in the CPC is configured in the same SN. In that case, for example, part or all of signaling of the DAPS SN change request or the response, signaling of the DL/UL transmission/reception with UE stop request information or the response, data forwarding to be performed before the UE between the S-SN and the T-SN connects to the T-SN and signaling related to the data forwarding, and data forwarding to be performed after the UE connects to the T-SN and signaling related to the data forwarding may be omitted. The DAPS configuration can be performed when an intra-SN CPC process is performed.

### Fourth Embodiment.

In a case where DC is configured, the SN change may be performed when the inter-MN HO is performed. Even in such a case, it is required to reduce communication interruption time at the time of the SN change process.

The fourth embodiment discloses a method for solving such a problem.

In order to solve the above problem, in the communication system according to the fourth embodiment, the DAPS configuration is performed in inter-MN HO with SN change. The DAPS SN change is performed in the inter-MN HO with SN change. In the inter-MN HO, the MN as an HO destination (T-MN) determines an SN after change (T-SN). Hereinafter, a process in which the DAPS SN change is performed in the inter-MN HO with SN change is sometimes referred to as inter-MN HO with DAPS SN change.

It is preferable to appropriately apply the DAPS SN change method disclosed in the second embodiment to the DAPS SN change process in the inter-MN HO with DAPS SN change. However, unlike the second embodiment, the T-SN is determined by the T-MN. Therefore, the method disclosed in the second embodiment cannot be applied as it is. A DAPS SN change method in a case where the T-MN determines the T-SN will be disclosed.

Since the T-MN determines the T-SN, a direct link is not configured between the MN as an HO source (S-MN) and the T-SN, and thus direct transmission cannot be performed between the S-MN and the T-SN. Therefore, it is not possible to apply the method disclosed in the second embodiment as it is in which information and data are transmitted between the SN before change (S-SN) and the T-SN via the MN in the DAPS SN change process. Hereinafter, a method for solving such a problem will be disclosed.

The S-MN transmits, to the T-MN, an inter-MN HO with DAPS SN change request. The T-MN that has received the request determines an SN after DAPS SN change (T-SN). The T-MN that has determined the T-SN transmits, to the T-SN, the inter-MN HO with DAPS SN change request. Thus, the S-MN can trigger the inter-MN HO with DAPS SN change. In addition, the S-MN can trigger the DAPS SN change process for the T-SN determined by the T-MN.

Information and data are transmitted between the S-SN and the T-SN via the S-MN and the T-MN. Information and data are transmitted between the S-MN and the T-SN via the T-MN.

The S-MN transmits, to the S-SN, information requesting the start of data forwarding to be performed before the UE connects to the T-SN. The S-MN may transmit, to the S-SN, information requesting the transmission of EARLY STATUS TRANSFER. Regarding the information, it is preferable to appropriately apply the method disclosed in the second embodiment.

In order to perform data forwarding before the UE connects to the T-SN, the S-SN transmits EARLY STATUS TRANSFER to the S-MN. The S-MN that has received EARLY STATUS TRANSFER from the S-SN transmits EARLY STATUS TRANSFER to the T-MN. The T-MN that has received EARLY STATUS TRANSFER from the S-MN transmits EARLY STATUS TRANSFER to the T-SN. The S-MN and/or the T-MN may transmit the received EARLY STATUS TRANSFER without performing decoding.

The EARLY STATUS TRANSFER may be for SN. Regarding the EARLY STATUS TRANSFER, it is preferable to appropriately apply the method disclosed in the second embodiment.

After transmitting the EARLY STATUS TRANSFER, the S-SN starts data forwarding. The S-SN continuously allocates an SN to DL data received from the UPF and performs forwarding thereof to the S-MN. The S-MN forwards the DL data forwarded from the S-SN to the T-MN. The T-MN forwards the DL data forwarded from the S-MN to the T-SN. The T-SN buffers the DL data forwarded from the S-SN via the S-MN and the T-MN. The T-SN may transmit, to the UE, the DL data forwarded from the S-SN and then buffered after connecting to the UE by the SN change process.

The UE stops the UL/DL transmission/reception with the S-SN when succeeding in the RA procedure with the T-SN in the SN change process. The UE may stop the UL/DL transmission/reception with the S-SN in a case of receiving the S-SN release request from the T-SN after the RA procedure with the T-SN in the SN change process.

The T-SN may transmit SN change success information to the T-MN when succeeding in the RA procedure with the UE. The T-MN may transmit the SN change success information received from the T-SN to the S-MN. The T-MN and the S-MN can recognize that the T-SN has succeeded in the RA procedure with the UE. As another method, the T-SN may transmit the SN change success information to the T-MN when receiving an RRC reconfiguration complete message from the UE. The T-MN may transmit the SN change success information received from the T-SN to the S-MN. The T-MN and the S-MN can recognize that the UE has connected to the T-SN. As another method, the T-SN may transmit the SN change success information to the T-MN when receiving an SN reconfiguration complete message from the T-MN. The T-MN may transmit the SN change success information received from the T-SN to the S-MN. The T-MN and the S-MN can recognize that the UE has completed the configuration of the T-SN.

As another method, the T-MN may transmit the SN change success information to the S-MN when succeeding in the RA procedure with the UE. Alternatively, the T-MN may transmit the SN change success information to the S-MN when receiving the RRC reconfiguration complete message from the UE. The T-MN and the S-MN can recognize that the UE has completed the configuration of the T-SN. In addition, since signaling between the T-MN and the T-SN is not required, the amount of signaling can be reduced.

In a case where a predetermined condition is satisfied, for example, in a case where it is recognized that the UE has completed the configuration of the T-SN, the S-MN transmits DL/UL transmission/reception stop request information to the S-SN. The S-SN that has received the DL/UL transmission/reception stop request information (S-SN release request) transmits, via the S-MN and the T-MN, SN STATUS TRANSFER to the T-SN in order to perform data forwarding. The S-SN transmits SN STATUS TRANSFER to the S-MN, the S-MN that has received the SN STATUS TRANSFER transmits SN STATUS TRANSFER to the T-MN, and the T-MN that has received the SN STATUS TRANSFER transmits SN STATUS TRANSFER to the T-SN.

After transmitting SN STATUS TRANSFER, the S-SN starts data forwarding to the T-SN. The S-SN forwards DL data received from the UPF to the T-SN via the S-MN and the T-MN. The S-SN that has received the DL data from the UPF performs forwarding to the S-MN, the S-MN that has received the forwarding data from the S-SN performs forwarding to the T-MN, and the T-MN that has received the forwarding data from the S-MN performs forwarding to the T-SN.

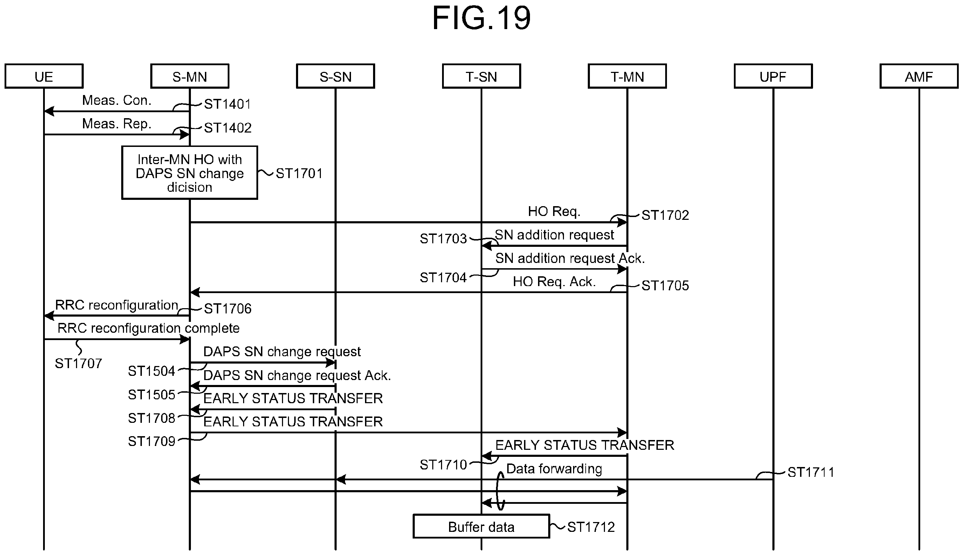

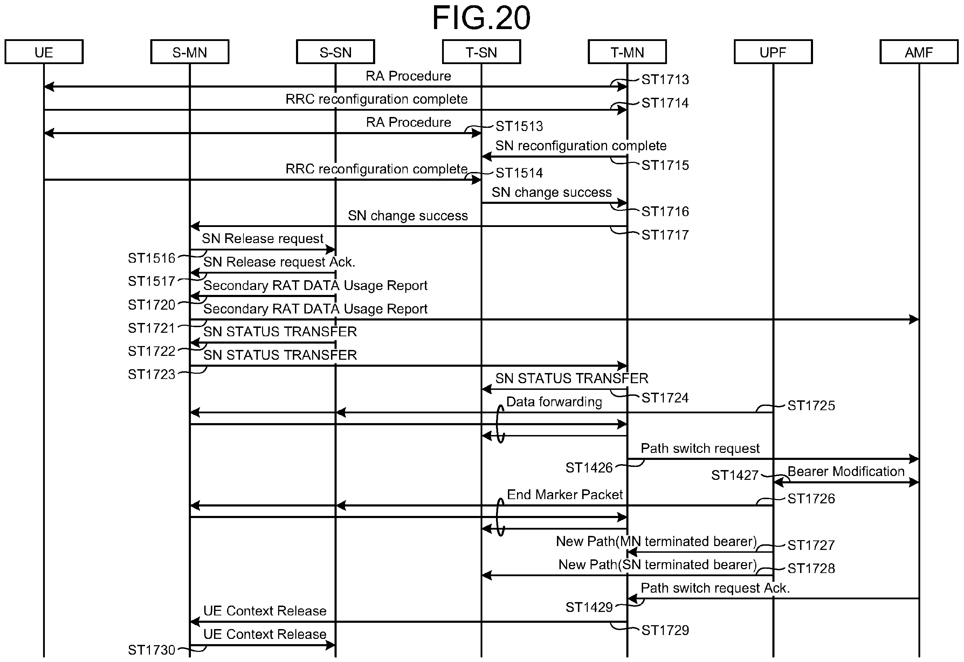

FIGS. 19 and 20 are each a diagram of a sequence illustrating an example of a method for executing the inter-MN HO with DAPS SN change in the fourth embodiment. FIG. 19 illustrates a first half of the sequence, and FIG. 20 illustrates a second half of the sequence. In FIGS. 19 and 20, steps common to those in FIGS. 15 to 18 are given the same step numbers as those therein, and a common description will be omitted.

In step ST1701, an MN as an HO source (source MN (hereinafter, sometimes referred to as an S-MN)) determines to execute the inter-MN HO with DAPS SN change for the UE. The S-MN determines a T-MN to be an HO destination. The S-MN may determine a target PCell to be an HO destination (hereinafter, sometimes referred to as a T-PCell). An MN constituting the T-PCell may be determined as the T-MN. The S-MN determines to perform a configuration of the inter-MN HO with DAPS SN change for the T-MN. The S-MN may use the measurement result received from the UE in step ST1402 in the determination. The S-MN may use CSI received from the UE in the determination. It is possible to promptly follow deterioration of a communication environment and to improve the reliability of communication.

In step ST1702, the S-MN transmits, to the T-MN, an inter-MN HO with DAPS SN change request. Xn signaling may be used for the transmission of the request. A new message may be provided. Alternatively, an existing message may be used. For example, an HO Request message may be used. Here (in the example illustrated in FIG. 19), a case will be disclosed where the HO Request message is used. As the inter-MN HO with DAPS SN change request, both an inter-MN HO request and the DAPS SN change configuration are preferably included in the HO Request message. Consequently, the T-MN can recognize that it is an inter-MN HO with DAPS SN change request.

The S-MN may include, in the inter-MN HO with DAPS SN change request, information about the UE as a target of the inter-MN HO with DAPS SN change, information about the S-MN itself, information about the S-SN for which DC is configured, and the like, and perform transmission thereof to the T-MN. As the information about the UE, an identifier of the UE is exemplified. As the information about the S-MN, an identifier of the MN and an RRC configuration of the S-MN are exemplified. As the information about the S-SN, an identifier of the S-SN and an RRC configuration of the S-SN are exemplified. Thus, the T-MN can recognize the S-SN for which DC is configured by the S-MN.

The T-MN that has received the inter-MN HO with DAPS SN change request from the S-MN determines a T-SN to be an SN after DAPS SN change. The measurement result reported from the UE to the S-MN may be used for the determination. The S-MN may include the measurement result received from the UE in the HO Request message and perform transmission thereof to the T-MN. The T-MN may use the CSI reported from the UE to the S-MN for the determination. The S-MN may include the CSI received from the UE in the HO Request message and perform transmission thereof to the T-MN. It is possible to promptly follow deterioration of a communication environment and to improve the reliability of communication.

In step ST1703, the T-MN transmits, to the T-SN determined as an SN after DAPS SN change, an inter-MN HO with DAPS SN change request. Only a DAPS SN change request may be transmitted. Xn signaling may be used for the transmission of the request. A new message may be provided. Alternatively, an existing message may be used. For example, an SN addition request message may be used. Here (in the example illustrated in FIG. 19), a case will be disclosed where the SN addition request message is used. As the DAPS SN change request, both an SN change request and the DAPS configuration are preferably included in the SN addition request message. Consequently, the T-SN can recognize that it is a DAPS SN change request.

The T-MN may include information about the S-SN for which DC is configured by the S-MN in the SN addition request message and perform transmission thereof to the T-SN. As the information about the S-SN, an identifier of the S-SN and an RRC configuration of the S-SN are exemplified. Thus, the T-SN can recognize the S-SN for which DC is configured by the S-MN.

The T-SN that has received the DAPS SN change request from the T-MN determines whether the DAPS SN configuration can be accepted. The T-SN that has determined that the DAPS SN configuration can be accepted transmits, to the T-MN, an acknowledgement to the DAP SN change request in step ST1704. Xn signaling may be used for the transmission of the acknowledgements. A new message may be provided. Alternatively, an existing message may be used. For example, an SN addition request Acknowledge message may be used. DAPS configuration acceptance information and/or SN change acceptance information is preferably included in the message. Consequently, the T-MN that has received the acknowledgement from the T-SN can recognize which configuration the T-SN can accept. As another method, in a case of the acknowledgement, both the DAPS configuration acceptance information and the SN change acceptance information may be included, and in a case of the reject response, either one of the pieces of the information may be included, neither of the pieces of the information may be included, or reject information on both thereof may be included. Consequently, the T-MN that has received the acknowledgement from the T-SN can recognize whether the T-SN can accept the DAPS SN change.

The T-MN that has received the acknowledgement to the DAPS SN change request from the T-SN transmits an acknowledgement to the inter-MN HO with DAPS SN change request to the S-MN in step ST1705. The acknowledgement preferably includes information about the T-MN and information about the T-SN. As the information about the T-MN, an identifier of the T-MN and an RRC configuration of the T-MN are exemplified. Similarly, as the information about the T-SN, an identifier of the T-SN and an RRC configuration of the T-SN are exemplified. Thus, the S-MN can recognize that the T-MN has accepted the inter-MN HO with DAPS SN change request and that an SN after DAPS SN change is the T-SN.

In a case of receiving a reject response to the DAPS SN change request from the T-SN, the T-MN may transmit, to the S-MN, a reject response to the inter-MN HO with DAPS SN change request. The reject response may include cause information. As the cause information, for example, rejection of the inter-MN HO with DAPS SN change request, rejection of the inter-MN HO request, or rejection of the DAPS SN change is preferably provided.

The S-MN that has received the acknowledgement to the inter-MN HO with DAPS SN change request from the T-MN transmits, to the UE in step ST1706, an inter-MN HO with DAPS SN change instruction. The instruction preferably includes information indicating that the T-MN is configured as an MN, that the T-SN is configured as an SN in DC, and that the DAPS SN change is performed for the T-SN. The instruction may include the information about the DC configuration or the information about the DAPS configuration. As information for configuring the T-SN as the SN in DC, an identifier and an RRC configuration of the T-SN are preferably included. In addition, the RRC configuration may include, as the information about the DAPS configuration, information about a DAPS bearer for which the DAPS SN change is performed. An RRC reconfiguration message may be used for the instruction. Consequently, the UE can recognize an instruction for inter-MN HO to the T-MN with DAPS SN change to the T-SN. The UE that has completed the configuration for the inter-MN HO to the T-MN with DAPS SN change to the T-SN transmits, to the S-MN, completion of the configuration of the inter-MN HO with DAPS SN change in step ST1707. RRC signaling may be used for the transmission of the completion of the configuration of the inter-MN HO with DAPS SN change. For example, RRC reconfiguration complete may be used

The UE does not stop the UL/DL transmission/reception with the S-SN when receiving the instruction in step ST1706. That is, the UE continues the UL/DL transmission/reception with the S-SN.

The S-SN that has received the DAPS SN change request from the S-MN in step ST1504 transmits EARLY STATUS TRANSFER to the T-SN in steps ST1708, ST1709, and ST1710. The S-SN preferably transmits EARLY STATUS TRANSFER to the T-SN via the S-MN and the T-MN. The EARLY STATUS TRANSFER is preferably transmitted before the UE connects to the T-SN. The S-SN may execute steps ST1708 to ST1710 and transmit EARLY STATUS TRANSFER to the T-SN in response not to the reception of the DAPS SN change request in step ST1504, but to the transmission of the acknowledgement to the DAPS SN change request in step ST1505. That is, the S-SN may transmit EARLY STATUS TRANSFER in a case of transmitting the acknowledgement to the DAPS SN change request.

EARLY STATUS TRANSFER preferably includes the SN and/or the HFN of the first PDCP SDU to be transferred from the S-SN to the T-SN. EARLY STATUS TRANSFER to be transmitted from the S-SN to the T-SN may not include UL SN STATUS. DL and UL are preferably separated in EARLY STATUS TRANSFER to be transmitted to the T-SN as described above. Regarding the DL, it is possible to determine the SN and/or the HFN for which transfer to the T-SN is started at an early stage, and to perform notification to the T-SN by using EARLY STATUS TRANSFER. Regarding the UL, since SN STATUS does not need to be included in EARLY STATUS TRANSFER to be transmitted to the T-SN, it is not necessary to determine the SN to be added to UL data, and continuous transmission from the UE to the S-SN can be performed.

The S-SN that has transmitted EARLY STATUS TRANSFER to the T-SN transfers the DL data from the UPF to the T-SN in step ST1711. The S-SN adds the SN and the HFN to the DL data received from the UPF and performs transmission thereof to the T-SN. The S-SN preferably transfers the DL data to the T-SN via the S-MN and the T-MN. The T-SN buffers the transferred DL data received from the S-SN.

Thus, the S-SN can perform data forwarding to the T-SN before the UE connects to the T-SN. The T-SN can transmit the DL data to the UE at an early stage after connecting to the UE by the DAPS SN change process.

In step ST1713, the UE performs the RA procedure with the T-MN. In step ST1714, the UE transmits an RRC reconfiguration complete message to the T-MN. The UE transmits, to the T-MN, completion of the configuration of the T-MN employed as an HO destination and completion of the configuration of the T-SN employed as an SN after DAPS SN change. The above RRC reconfiguration complete message is preferably used for the transmission. Thus, the T-MN can recognize that the UE has completed the configuration of the T-SN.

In step ST1715, the T-MN transmits, to the T-SN, completion of the configuration of the T-SN by the UE. An SN reconfiguration complete message may be used for the transmission. Thus, the T-SN can recognize that the UE has completed the configuration of the T-SN as an SN after DAPS SN change.

The UE that has received the DAPS SN change instruction to the T-SN performs the RA procedure with the T-SN in step ST1513. In step ST1514, the UE transmits an RRC reconfiguration complete message to the T-SN.

The UE may stop the UL/DL transmission/reception with the S-SN when succeeding in the RA procedure with the T-SN. As another method, the T-SN may transmit an S-SN release request to the UE to cause the UE to stop the UL/DL transmission/reception with the S-SN. For example, the request may be transmitted in MSG4 in the RA procedure in step ST1513. Alternatively, the request may be transmitted after the RA procedure in step ST1513 is finished. Alternatively, the request may be transmitted after the reception of the RRC reconfiguration complete in step ST1514. In a case of receiving the S-SN release request, the UE stops the UL/DL transmission/reception with the S-SN. Thus, the UE can stop the UL/DL transmission/reception with the S-SN continued after the reception of the inter-MN HO with DAPS SN change instruction in step ST1706.

After succeeding in the RA procedure in step ST1513 or after receiving the RRC reconfiguration complete in step ST1514, the T-SN transmits an SN change success message to the S-MN in steps ST1716 and ST1717. The transmission is preferably performed via the T-MN. Consequently, the S-MN can recognize that the RA procedure has succeeded between the UE and the T-SN or that the UE and the T-SN have been connected. The S-MN that has recognized that the UE and the T-SN have been connected may transmit DL/UL stop request information to the S-SN. Alternatively, as illustrated in step ST1516, an SN release request message may be transmitted.

The S-SN that has recognized that the UE and the T-SN have been connected performs data forwarding to the T-SN after the UE connects to the T-SN. The S-SN preferably performs data forwarding to the T-SN via the S-MN and the T-MN. The S-SN transmits SN STATUS TRANSFER to the T-SN via the S-MN and the T-MN in steps ST1722, ST1723, and ST1724. The S-SN transfers the DL data from the UPF to the T-SN in step ST1725. The transfer is preferably performed via the S-MN and the T-MN. Thus, it is possible to transfer the DL data after DL transmission from the S-SN to the UE is stopped and before the UPF performs a path switch to the T-SN.

In step ST1720, the S-SN may transmit a data usage report to the S-MN. In step ST1721, the S-MN may transmit the data usage report of the S-SN to the AMF. The amount of DL data transmitted via the S-SN is preferably included in the report. In steps ST1426, ST1427, ST1726, ST1727, ST1728, and ST1429, a path switch from the S-MN to the T-MN and/or a path switch from the S-SN to the T-SN is performed among the T-MN, the AMF, the UPF, the S-SN, the S-MN, and the T-SN. After the path switch is completed, the T-MN transmits UE Context Release to the S-MN in step ST1729. In step ST1730, the S-MN transmits UE Context Release to the S-SN. When receiving the UE Context Release, the S-MN and the S-SN perform release of UE context.

Thus, the inter-MN HO with DAPS SN change can be executed for the UE.

In the inter-MN HO with DAPS SN change, in a case of an MN terminated bearer, data forwarding from the S-MN to the T-MN is performed. In a case of an SN terminated bearer, data forwarding from the S-SN to the T-SN is performed. In the inter-MN HO with DAPS SN change, both the data forwarding from the S-MN to the T-MN and the data forwarding from the S-SN to the T-SN may be performed. In the inter-MN HO with DAPS SN change, both the MN terminated bearer and the SN terminated bearer may be configured in the DC configuration, and in such a case, both data forwardings are preferably performed.

With the disclosure of the fourth embodiment, the inter-MN HO with DAPS SN change can be executed. The DAPS configuration can be performed in SN change at the time of the inter-MN HO with SN change. Therefore, it is possible to reduce communication interruption time at the time of the inter-MN HO with SN change. A high communication capacity can be maintained in a process of the inter-MN HO with SN change in a case where DC is configured.

DAPS HO may be performed in the inter-MN HO with SN change. Both the DAPS HO and the DAPS SN change may be performed in the inter-MN HO with SN change. It is preferable to appropriately apply an inter-MN DAPS HO process to the method disclosed in the fourth embodiment in which the DAPS SN change is performed in the inter-MN HO with SN change.

For example, in step ST1705 of FIG. 19, the S-MN does not stop the DL/UL transmission/reception with the UE even in a case of receiving the HO request acknowledgment from the T-MN. That is, the S-MN continues the DL/UL transmission/reception with the UE. After connecting to the UE, the T-MN may transmit an HO success message to the S-MN. The S-MN preferably stops the DL/UL transmission/reception with the UE when receiving the HO success message or the SN change success message from the T-MN.

For example, in a case where both the DAPS HO and DAPS SN change instructions are received in the inter-MN HO with DAPS SN change instruction from the S-MN in step ST1706, the UE does not stop the UL/DL transmission/reception with the S-SN and the UL/DL transmission/reception with the S-MN. That is, the UE continues the UL/DL transmission/reception with the S-SN and the UL/DL transmission/reception with the S-MN. After connecting to the UE, the T-MN may transmit an S-MN release request to the UE. The UE preferably stops the UL/DL transmission/reception with the S-MN after succeeding in the RA procedure with the T-MN or after receiving the S-MN release request from the T-MN.

In addition, the S-MN may perform data forwarding to the T-MN before the UE connects to the T-MN. For the data forwarding, the S-MN preferably transmits EARLY STATUS TRANSFER to the T-MN. For example, the S-MN that has transmitted, in step ST1706, both the DAPS HO and DAPS SN change instructions by the inter-MN HO with DAPS SN change instruction transmits EARLY STATUS TRANSFER to the T-MN. The S-MN preferably forwards, to the T-MN, the DL data from the UPF.

In the inter-MN HO with DAPS SN change, both the data forwarding from the S-MN to the T-MN before the UE connects to the T-MN and the data forwarding from the S-SN to the T-SN before the UE connects to the T-SN may be performed. In the inter-MN HO with DAPS SN change, both the MN terminated bearer and the SN terminated bearer may be configured in the DC configuration, and in such a case, both data forwardings are preferably performed.

Thus, the DAPS HO can be performed in the inter-MN HO with SN change. Both the DAPS HO and the DAPS SN change can be performed in the inter-MN HO with SN change. Therefore, it is possible to reduce communication interruption time in both the SN change and the inter-MN HO at the time of the inter-MN HO with SN change. A higher communication capacity can be maintained in the process of the inter-MN HO with SN change in the case where DC is configured.

CHO may be performed in the inter-MN HO with SN change. Both the CHO and the DAPS SN change may be performed in the inter-MN HO with SN change. It is preferable to appropriately apply the CHO to the method disclosed in the fourth embodiment in which the DAPS SN change is performed in the inter-MN HO with SN change.

For example, the S-MN determines one or a plurality of candidate T-MNs. The S-MN preferably transmits both the CHO configuration and the DAPS SN change configuration to the candidate T-MNs. For example, both the configurations may be included in the HO request of step ST1702 of FIG. 19 and transmitted to the candidate T-MNs. The candidate T-MNs each determine a T-SN as an SN after DAPS SN change and transmit, to the T-SN, a DAPS SN change request. For example, the DAPS SN change request may be included in the SN addition request in step ST1703 of FIG. 19 and transmitted.

In addition, the data forwarding may be performed from the S-SN to the T-SNs determined by the candidate T-MNs before the UE connects to the T-SN determined as an HO destination by a condition evaluation of the CHO. The S-SN may transmit EARLY STATUS TRANSFER for the data forwarding. The S-SN preferably transmits, via the candidate T-MNs, EARLY STATUS TRANSFER to the T-SNs determined by the candidate T-MNs, and performs data forwarding.

Thus, both the CHO and the DAPS SN change can be performed in the inter-MN HO with SN change. Therefore, at the time of the inter-MN HO with SN change, the communication interruption time at the SN change can be reduced, a high communication capacity can be maintained, and the robustness and reliability of the inter-MN HO can be improved.

DAPS CHO may be performed in the inter-MN HO with SN change. Both the DAPS CHO and the DAPS SN change may be performed in the inter-MN HO with SN change. It is preferable to appropriately combine and apply the method for performing the DAPS CHO disclosed in the first embodiment and the method disclosed in the fourth embodiment in which the DAPS SN change is performed in the inter-MN HO with SN change.

Thus, both the DAPS CHO and the DAPS SN change can be performed in the inter-MN HO with SN change. Therefore, at the time of the inter-MN HO with SN change, the communication interruption time can be reduced in the inter-MN HO and the SN change, a high communication capacity can be maintained, and the robustness and reliability of the inter-MN HO can be improved.

A statement of "gNB or cell" in the present disclosure means that it may either be a gNB or a cell unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam; 3110, 3130, 3220, 3221, 3320 BAP-PDU; 3115, 3215 function unit; 3125 routing function unit.

## Claims

1. A communication system comprising:
a plurality of base stations, wherein
in a case where it is necessary to cause a communication terminal to perform handover to another base station, a first base station that is a base station to which the communication terminal is being connected among the plurality of base stations makes a handover configuration request to one or more second base stations that are base stations to be candidates for a handover destination among the plurality of base stations while maintaining connection to the communication terminal, and, after acceptance of the handover configuration request by the second base stations, the first base station gives an instruction for handover to the communication terminal being connected.

2. The communication system according to claim 1, wherein
the first base station makes the handover configuration request to all of the second base stations.

3. The communication system according to claim 1, wherein
the first base station makes the handover configuration request to any one of the second base stations.

4. The communication system according to any one of claims 1 to 3, wherein
in a case where the handover configuration request is accepted by the second base stations, the first base station starts transfer of downlink data to the second base stations that have accepted the handover configuration request.

5. A communication system comprising:
a master base station that is a base station that operates as a master node of dual connectivity in which a communication terminal simultaneously connects to two base stations; and
a secondary base station that is a base station that operates as a secondary node of the dual connectivity,
wherein
in a case where a communication terminal being connected to the master base station changes a secondary base station as a connection destination from a first secondary base station to a second secondary base station, the master base station makes a request to the second secondary base station for connection to the communication terminal, and, after acceptance of the request for connection to the communication terminal by the second secondary base station, the master base station transmits, to the first secondary base station, a request for switching a connection destination of the communication terminal, and
when receiving the request for switching a connection destination of the communication terminal from the master base station, the first secondary base station starts transfer to the second secondary base station of downlink data directed to the communication terminal, while continuing transmission and reception of data with the communication terminal.

6. A communication system comprising:
a master base station that is a base station that operates as a master node of dual connectivity in which a communication terminal simultaneously connects to two base stations; and
a secondary base station that is a base station that operates as a secondary node of the dual connectivity,
wherein
in a case where a communication terminal being connected to the master base station changes a secondary base station as a connection destination from a first secondary base station to a second secondary base station, the master base station makes a request to a plurality of secondary base stations to be candidates for the second secondary base station for connection to the communication terminal, and, after acceptance of the request for connection to the communication terminal by secondary base stations as candidates for the second secondary base station, the master base station transmits, to the first secondary base station, a request for switching a connection destination of the communication terminal, and
when receiving the request for switching a connection destination of the communication terminal from the master base station, the first secondary base station starts transfer to candidates for the second secondary base station of downlink data directed to the communication terminal, while continuing transmission and reception of data with the communication terminal.

7. A communication system comprising:
a master base station that is a base station that operates as a master node of dual connectivity in which a communication terminal simultaneously connects to two base stations; and
a secondary base station that is a base station that operates as a secondary node of the dual connectivity,
wherein
a first master base station that is the master base station to which the communication terminal is being connected makes a request to a second master base station that is a master base station that operates as a master node as a handover destination of the communication terminal for a configuration of handover with change of a secondary node of the communication terminal in a case where there is a need for handover with change of a secondary node that is a process of changing a master node and a secondary node as connection destinations of the communication terminal being connected to the first master base station,
the second master base station makes a request to a switching destination secondary base station that is a secondary base station that operates as a secondary node as a new connection destination of the communication terminal for connection to the communication terminal, and when the request for connection to the communication terminal is accepted by the switching destination secondary base station, the second master base station notifies the first master base station of acceptance of handover with change of a secondary node of the communication terminal,
when handover with change of a secondary node of the communication terminal is accepted by the second master base station, the first master base station gives an instruction for handover with change of a secondary node to the communication terminal, and transmits a request for switching a connection destination of the communication terminal to a switching source secondary base station that is a secondary base station to which the communication terminal is being connected, and
when receiving the request for switching a connection destination of the communication terminal from the first master base station, the switching source secondary base station starts transfer to the switching destination secondary base station of downlink data directed to the communication terminal, while continuing transmission and reception of data with the communication terminal.
